(19) Europäisches Patentamt
European Patent Office
Office européen des brevets

(11) EP 4 354 816 A1

(12) EUROPEAN PATENT APPLICATION
published in accordance with Art. 153(4) EPC

(43) Date of publication:
17.04.2024 Bulletin 2024/16

(51) International Patent Classification (IPC):
H04L 41/08 (2022.01)    G06N 3/00 (2006.01)

(21) Application number: 22819264.7

(52) Cooperative Patent Classification (CPC):
G06N 3/00; H04L 41/08; H04L 41/16

(22) Date of filing: 06.05.2022

(86) International application number:
PCT/CN2022/091278

(87) International publication number:
WO 2022/257662 (15.12.2022 Gazette 2022/50)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 09.06.2021 CN 202110640849

(71) Applicant: Huawei Technologies Co., Ltd.
Longgang
Shenzhen, Guangdong 518129 (CN)

(72) Inventors:
• SHEN, Haihua
Shenzhen, Guangdong 518129 (CN)
• LIANG, Wenliang
Shenzhen, Guangdong 518129 (CN)
• WANG, Enbo
Shenzhen, Guangdong 518129 (CN)

(74) Representative: Körber, Martin Hans
Mitscherlich PartmbB
Patent- und Rechtsanwälte
Karlstraße 7
80333 München (DE)

(54) **COMMUNICATION METHOD AND COMMUNICATION APPARATUS USING ARTIFICIAL INTELLIGENCE**

(57) This application discloses a communication method using artificial intelligence and a communication apparatus, to reduce transmission of a model file of an AI service when the AI service is executed. The method is: A first communication apparatus receives information about an AI model of an AI service from a second communication apparatus, where the AI model includes N sub-network models, the N sub-network models respectively correspond to N model identifiers IDs, the first communication apparatus may determine the N model IDs, or the second communication apparatus may determine the N model IDs, the information about the AI model includes model files of X sub-network models in the N sub-network models, N and X are positive integers, N is greater than 1, and X is less than or equal to N; and the first communication apparatus executes the AI service based on the information about the AI model.

FIG. 4

**Description**

**CROSS-REFERENCE TO RELATED APPLICATIONS**

This application claims priority to Chinese Patent Application No. 202110640849.5, filed with the China National Intellectual Property Administration on June 9, 2021 and entitled "COMMUNICATION METHOD USING ARTIFICIAL INTELLIGENCE AND COMMUNICATION APPARATUS", which is incorporated herein by reference in its entirety.

**TECHNICAL FIELD**

Embodiments of this application relate to the field of artificial intelligence technologies, and in particular, to a communication method using artificial intelligence and a communication apparatus.

**BACKGROUND**

An artificial intelligence (artificial intelligence, AI) technology is a branch of computer science, which runs through the history of computer development, and is an important development direction of information technology industry. With development of communication technologies, an increasing quantity of applications are to be intelligentized through AI. AI is a technology capable of simulating human cognition through machines. A core capability of AI is to make judgments or predictions based on given inputs. An AI application needs to undergo two processes: AI model training and inference. A purpose of training is to obtain one or more AI models, and a purpose of inference is to apply a trained AI model to new data to obtain a prediction result or an evaluation result.

The AI model includes a network structure, a parameter (a weight, an offset, and the like) corresponding to the network structure, code, and a configuration. Complexity of the AI model is related to the network structure. Different AI services may require different AI models. As AI service requirements constantly increase, a quantity of AI models may keep increasing.

As the quantity of AI models increases, when an AI service is executed, a model file that is of the AI service and that needs to be transmitted is large, and more transmission resources are occupied.

**SUMMARY**

Embodiments of this application provide a communication method using artificial intelligence and a communication apparatus, to reduce transmission of a model file of an AI service when the AI service is executed.

According to a first aspect, a communication method using artificial intelligence is provided. The method may be performed by a first communication apparatus, or may be performed by a component (for example, a processor, a chip, or a chip system) of the first communication apparatus. The first communication apparatus may be a terminal device or may be a network device. The first communication apparatus may be a model requester, and the second communication apparatus is a model provider. The method may be implemented by using the following steps: receiving information about an AI model of an AI service from a second communication apparatus, where the AI model includes N sub-network models, the N sub-network models respectively correspond to N model identifiers IDs, the information about the AI model includes model files of X sub-network models in the N sub-network models, N and X are positive integers, N is greater than 1, and X is less than or equal to N; and executing the AI service based on the information about the AI model. The AI model is divided into the N sub-network models, and the N sub-network models respectively correspond to the N model identifiers IDs, to improve management performance of the AI model in a network, for example, improve utilization of query and storage resources. The model file of the sub-network model of the AI service is transmitted, so that utilization of transmission resources can be improved.

In a possible design, the N sub-network models include Y backbone network models and (N-Y) functional network models, and Y is a positive integer.

In a possible design, before the receiving information about an artificial intelligence AI model from a second communication apparatus, model IDs of the X sub-network models may be sent to the second communication apparatus. Alternatively, the model IDs of the X sub-network models respectively have corresponding indexes, and the indexes corresponding to the model IDs of the X sub-network models may be sent to the second communication apparatus. The model files corresponding to the X sub-network models need to be requested by the first communication apparatus from a second network device, and the model files corresponding to the X sub-network models may not exist locally or be damaged in the first communication apparatus, for example, not locally exist, damaged, missing, or nonexistent. For example, if the first communication apparatus locally has model IDs of (N-X) sub-network models, or the first communication apparatus locally has model files corresponding to the (N-X) sub-network models, the first communication apparatus only needs to send the model IDs of the X sub-network models to the second communication apparatus to indicate to request the model files corresponding to the model IDs of the X sub-network models, and does not need to request model files of all the N sub-network models included in the AI model. In this way, network transmission between the model requester and the model provider can be reduced. The indexes corresponding to the model IDs of the X sub-network models are sent, so that information exchange between the model requester and the model provider can be reduced.

In a possible design, the model IDs of the (N-X) sub-network models other than the X sub-network models in the N sub-network models may be further sent to the second communication apparatus. Alternatively, the model IDs of the (N-X) sub-network models respectively have corresponding indexes, and the indexes corresponding to the model IDs of the (N-X) sub-network models may be sent to the second communication apparatus. The model files corresponding to the (N-X) sub-network models already exist locally in the first communication apparatus. The first communication apparatus sends the model IDs of the (N-X) sub-network models other than the X sub-network models in the N sub-network models to the second communication apparatus, to notify the second communication apparatus of the sub-network model IDs of the first communication apparatus, that is, notify the second communication apparatus of capability information of the sub-network models of the first communication apparatus, so that the second communication apparatus can be assisted in determining the model IDs of the N sub-network models of the AI service. For example, a model ID of a sub-network model that already exists in the first communication apparatus may be preferably selected. This helps reduce network transmission between the model requester and the model provider. The indexes corresponding to the model IDs of the (N-X) sub-network models are transmitted, so that information exchange between the model requester and the model provider can be reduced.

In a possible design, information about the N sub-network models may be further received from the second communication apparatus, where the information about the N sub-network models includes the model IDs of the N sub-network models or indexes corresponding to the AI model

In a possible design, the model IDs of the (N-X) sub-network models other than the X sub-network models in the N sub-network models may be received from the second communication apparatus. Alternatively, the model IDs of the (N-X) sub-network models respectively have corresponding indexes, and the indexes corresponding to the model IDs that are of the (N-X) sub-network models and that are sent by the second communication apparatus may be received. In this way, the first communication apparatus may learn that the N sub-network model IDs included in the AI service include the model IDs of the (N-X) sub-network models that already exist locally, and the corresponding model files may be found locally based on the model IDs of the (N-X) sub-network models, to subsequently form the AI model to execute the AI service. The indexes corresponding to the model IDs of the (N-X) sub-network models are transmitted, so that information exchange between the model requester and the model provider can be reduced.

In a possible design, one or a combination of the following information may be further sent to the second communication apparatus: a service type of the AI service, a dataset type, a data type, or a computing resource. All the information may assist the second communication apparatus in determining the model IDs of the N sub-network models. In this way, the second communication apparatus can send the model IDs of the N sub-network models to the first communication apparatus, and the first communication apparatus learns which sub-network models are correspondingly obtained by dividing the AI service, to subsequently request, from the second communication apparatus, a model file that does not exist in the first communication apparatus.

In a possible design, the first communication apparatus may further determine the model IDs of the N sub-network models.

For example, the first communication apparatus may determine a model ID group of a first sub-network model in the N sub-network models based on a communication scenario of the AI service, and determine a model ID of the first sub-network model, where the model ID of the first sub-network model is one model ID in the model ID group.

In a possible design, two models corresponding to any two model IDs in the model ID group have a similarity, and the similarity may be indicated in the following manner: a difference between accuracy rates of the two models corresponding to the any two model IDs in the model ID group is less than a specified threshold or the accuracy rates are both within a specified range. The sub-network model IDs with similar features or similar functions can form the model ID group through calculation of the similarity. Different AI services can share the model ID in the model ID group. For example, when a model ID does not exist, the model ID may be replaced with a model ID in a model ID group in which the model ID that does not exist is located. For another example, when the model requester determines that the model requester has another model ID in a same model ID group as a required model ID, the model requester may not request a model file of the model ID from the model provider, but select the another model ID that is similar to the model ID for replacement. In this way, network transmission between the model requester and the model provider can be reduced.

In a possible design, the model ID includes or indicates the following information: a model type of a sub-network model, a dataset type of the sub-network model, a data type of the sub-network model, a network layer number of the sub-network model, a backbone network type of the sub-network model, a backbone network dataset type of the sub-network model, a backbone network data type of the sub-network model, a backbone network layer number of the sub-network model, or a computing resource type of the sub-network model. A solution in which the sub-network model has the corresponding ID is designed, so that model file information corresponding to the sub-network model is quickly indexed, transmitted, and shared on a network side (for example, a 5G/6G network, a cloud, or an edge) and a terminal side by using the sub-network model ID.

In a possible design, the model ID is included in a packet header format; or the model ID is information obtained according to a mapping function, an input of the mapping function is information indicated by the model ID, and an output of the mapping function is the model ID.

According to a second aspect, a communication method using artificial intelligence is provided. The method may be performed by a second communication apparatus, or may be performed by a component (for example, a processor, a chip, or a chip system) of the second communication apparatus. The second communication apparatus may be a terminal device or may be a network device. Generally, the second communication apparatus is a network device. The first communication apparatus may be a model requester, and the second communication apparatus is a model provider. The method may be implemented by using the following steps: determining information about an AI model of an AI service, where the AI model includes N sub-network models, the N sub-network models respectively correspond to N model identifiers IDs, the information about the AI model includes model files of X sub-network models in the N sub-network models, N and X are positive integers, N is greater than 1, and X is less than or equal to N; and sending the information about the AI model. The AI model is divided into the N sub-network models, and the N sub-network models respectively correspond to the N model identifiers IDs, to improve management performance of the AI model in a network, for example, improve utilization of query and storage resources. The model file of the sub-network model of the AI service is transmitted, so that utilization of transmission resources can be improved.

In a possible design, the N sub-network models include Y backbone network models and (N-Y) functional network models, and Y is a positive integer.

In a possible design, model identifiers IDs of the X sub-network models may be further received from the first communication apparatus. Alternatively, the model IDs of the X sub-network models respectively have corresponding indexes, and the indexes corresponding to the model IDs that are of the X sub-network models and that are sent by the first communication apparatus may be received. For example, if the first communication apparatus locally has model IDs of (N-X) sub-network models, the first communication apparatus only needs to send the model IDs of the X sub-network models to the second communication apparatus to indicate to request the model files corresponding to the model IDs of the X sub-network models, and does not need to request model files of all the N sub-network models included in the AI model. In this way, network transmission between the model requester and the model provider can be reduced. The indexes corresponding to the model IDs of the X sub-network models are received, so that information exchange between the model requester and the model provider can be reduced.

In a possible design, the model identifiers IDs of the (N-X) sub-network models other than the X sub-network models in the N sub-network models may be further received from the first communication apparatus. Alternatively, the model IDs of the (N-X) sub-network models respectively have corresponding indexes, and the indexes corresponding to the model IDs that are of the (N-X) sub-network models and that are from the first communication apparatus may be received. The first communication apparatus sends the model IDs of the (N-X) sub-network models other than the X sub-network models in the N sub-network models to the second communication apparatus, to notify the second communication apparatus of the sub-network model IDs of the first communication apparatus, that is, notify the second communication apparatus of capability information of the sub-network models of the first communication apparatus, so that the second communication apparatus can be assisted in determining the model IDs of the N sub-network models of the AI service. For example, a model ID of a sub-network model that already exists in the first communication apparatus may be preferably selected. This helps reduce network transmission between the model requester and the model provider. The indexes corresponding to the model IDs of the (N-X) sub-network models are transmitted, so that information exchange between the model requester and the model provider can be reduced.

In a possible design, information about the N sub-network models may be further sent to the first communication apparatus, where the information about the N sub-network models includes the model IDs of the N sub-network models or indexes corresponding to the AI model

In a possible design, the model IDs of the (N-X) sub-network models other than the X sub-network models in the N sub-network models may be further sent to the first communication apparatus. Alternatively, the model IDs of the (N-X) sub-network models respectively have corresponding indexes, and the indexes corresponding to the model IDs of the (N-X) sub-network models may be sent to the first communication apparatus. In this way, the first communication apparatus may learn that the N sub-network model IDs included in the AI service include the model IDs of the (N-X) sub-network models that already exist locally, and the corresponding model files may be found locally based on the model IDs of the (N-X) sub-network models, to subsequently form the AI model to execute the AI service. The indexes corresponding to the model IDs of the (N-X) sub-network models are transmitted, so that information exchange between the model requester and the model provider can be reduced.

In a possible design, one or a combination of the following information may be further received from the first communication apparatus: a service type of the AI service, a dataset type, a data type, or a computing resource. All the information may assist the second communication apparatus in determining the model IDs of the N sub-network models. In this way, the second communication apparatus can send the model IDs of the N sub-network models to the first communication apparatus, and the first communication apparatus learns which sub-network models are correspondingly obtained by dividing the AI service, to subsequently request, from the second communication apparatus, a model file that does not exist in the first communication apparatus.

In a possible design, the second communication apparatus may further determine the model IDs of the N sub-network models.

For example, the second communication apparatus determines a model ID group of a first sub-network model in the N sub-network models based on a communication scenario of the AI service, and determines a model ID of the first sub-network model, where the model ID of the first sub-network model is one model ID in the model ID group.

In a possible design, two models corresponding to any two model IDs in the model ID group have a similarity, and the similarity may be indicated in the following manner: a difference between accuracy rates of the two models corresponding to the any two model IDs in the model ID group is less than a specified threshold or the accuracy rates are both within a specified range. The sub-network model IDs with similar features or similar functions can form the model ID group through calculation of the similarity Different AI services can share the model ID in the model ID group. For example, when a model ID does not exist, the model ID may be replaced with a model ID in a model ID group in which the model ID that does not exist is located. For another example, when the model requester determines that the model requester has another model ID in a same model ID group as a required model ID, the model requester may not request a model file of the model ID from the model provider, but select the another model ID that is similar to the model ID for replacement. In this way, network transmission between the model requester and the model provider can be reduced.

In a possible design, the model ID includes or indicates the following information: a model type of a sub-network model, a dataset type of the sub-network model, a data type of the sub-network model, a network layer number of the sub-network model, a backbone network type of the sub-network model, a backbone network dataset type of the sub-network model, a backbone network data type of the sub-network model, a backbone network layer number of the sub-network model, or a computing resource type of the sub-network model. A solution in which the sub-network model has the corresponding ID is designed, so that model file information corresponding to the sub-network model is quickly indexed, transmitted, and shared on a network side (for example, a 5G/6G network, a cloud, or an edge) and a terminal side by using the sub-network model ID.

In a possible design, the model ID is included in a packet header format; or the model ID is information obtained according to a mapping function, an input of the mapping function is information indicated by the model ID, and an output of the mapping function is the model ID.

According to a third aspect, a communication method using artificial intelligence is provided. The method may be performed by a first communication apparatus and a second communication apparatus, or may be performed by components (for example, a processor, a chip, or a chip system) in the first communication apparatus and the second communication apparatus. The first communication apparatus may be a terminal device or may be a network device, and the second communication apparatus may be a network device. The first communication apparatus may be a model requester, and the second communication apparatus is a model provider. The method may be implemented by using the following steps: A second communication apparatus sends information about an AI model of an AI service to a first communication apparatus, and the first communication apparatus receives the information about the AI model of the AI service from the second communication apparatus, the AI model includes N sub-network models, the information about the AI model includes model files of M2 sub-network models in the N sub-network models, the N sub-network models respectively correspond to N model identifiers IDs, N and M2 are positive integers, N is greater than 1, and M2 is less than or equal to N; and the first communication apparatus processes a first part of the AI service based on M sub-network models, where the M sub-network models are M1 sub-network models that already exist locally in the first communication apparatus and the M2 sub-network models. The AI model is divided into the N sub-network models, to improve management performance of the AI model in a network, for example, improve utilization of query and storage resources. The model file of the sub-network model of the AI service is transmitted, so that utilization of transmission resources can be improved.

Optionally, the first communication apparatus sends request information to the second communication apparatus, where the request information is used to request an artificial intelligence AI service; and the second communication apparatus receives the request information from the first communication apparatus.

Optionally, the second communication apparatus processes a second part of the AI service based on a sub-network model other than the M sub-network models in the N sub-network models. The second communication apparatus may further send a processing result of the second part of the AI service to the first communication apparatus, and the first communication apparatus obtains a processing result of the entire AI service based on the received processing result of the second part of the AI service and a processing result that is of the first part of the AI service and that is obtained by the first communication apparatus.

According to a fourth aspect, a communication apparatus is provided. The apparatus may be a first communication apparatus, or may be an apparatus (for example, a chip, a chip system, or a circuit) located in the first communication apparatus, or may be an apparatus that can be used in a match with the first communication apparatus. The first communication apparatus may be a terminal device or may be a network device. The apparatus has a function of implementing the method in any one of the first aspect or the possible designs of the first aspect. The function may be implemented by hardware, or may be implemented by hardware executing corresponding software. The hardware or software includes one or more modules corresponding to the foregoing functions. In a design, the apparatus may include a communication module and a processing module.

For example, the communication module is configured to receive information about an AI model of an AI service from a second communication apparatus, where the AI model includes N sub-network models, the N sub-network models respectively correspond to N model identifiers (IDs), the information about the AI model includes model files of X sub-network models in the N sub-network models, N and X are positive integers, N is greater than 1, and X is less than or equal to N; and the processing module is configured to execute the AI service based on the information about the AI model.

In a possible design, the N sub-network models include Y backbone network models and (N-Y) functional network models, and Y is a positive integer.

In a possible design, the communication module is further configured to: before receiving the information about the artificial intelligence AI model from the second communication apparatus, send, to the second communication apparatus, model IDs of the X sub-network models or indexes corresponding to the model IDs of the X sub-network models; or send, to the second communication apparatus, model IDs of (N-X) sub-network models other than the X sub-network models in the N sub-network models or indexes corresponding to the model IDs of the (N-X) sub-network models. The model files corresponding to the X sub-network models need to be requested by the first communication apparatus from a second network device, and the model files corresponding to the X sub-network models may not exist locally or be damaged in the first communication apparatus, for example, not locally exist, damaged, missing, or nonexistent. The model files corresponding to the (N-X) sub-network models already exist locally in the first communication apparatus.

In a possible design, the communication module is further configured to: receive information about the N sub-network models from the second communication apparatus, where the information about the N sub-network models includes the model IDs of the N sub-network models or indexes corresponding to the AI model; or receive, from the second communication apparatus, model IDs of (N-X) sub-network models other than the X sub-network models in the N sub-network models or indexes corresponding to the model IDs of the (N-X) sub-network models.

In a possible design, the communication module is further configured to send, to the second communication apparatus, one or a combination of the following information: a service type of the AI service, a dataset type, a data type, or a computing resource. The one or a combination of the following information of the service type of the AI service, the dataset type, the data type, or the computing resource is used to determine the model IDs of the N sub-network models, and is used to determine the model IDs of the N sub-network models.

In a possible design, the processing module is further configured to determine the model IDs of the N sub-network models.

In a possible design, when determining the model IDs of the N sub-network models, the processing module is configured to: determine a model ID group of a first sub-network model in the N sub-network models based on a communication scenario of the AI service; and determine a model ID of the first sub-network model, where the model ID of the first sub-network model is one model ID in the model ID group.

In a possible design, a difference between accuracy rates of two models corresponding to any two model IDs in the model ID group is less than a specified threshold or the accuracy rates are both within a specified range.

In a possible design, the model ID includes or indicates the following information: a model type of a sub-network model, a dataset type of the sub-network model, a data type of the sub-network model, a network layer number of the sub-network model, a backbone network type of the sub-network model, a backbone network dataset type of the sub-network model, a backbone network data type of the sub-network model, a backbone network layer number of the sub-network model, or a computing resource type of the sub-network model.

In a possible design, the model ID is included in a packet header format; or the model ID is information obtained according to a mapping function, an input of the mapping function is information indicated by the model ID, and an output of the mapping function is the model ID.

For beneficial effects of the fourth aspect and the possible designs, refer to descriptions of corresponding parts in the first aspect. Details are not described herein again.

According to a fifth aspect, a communication apparatus is provided. The apparatus may be a second communication apparatus, or may be an apparatus (for example, a chip, a chip system, or a circuit) located in the second communication apparatus, or may be an apparatus that can be used in a match with the second communication apparatus. The second communication apparatus may be a terminal device or may be a network device. The apparatus has a function of implementing the method in any one of the second aspect or the possible designs of the second aspect. The function may be implemented by hardware, or may be implemented by hardware executing corresponding software. The hardware or software includes one or more modules corresponding to the foregoing functions. In a design, the apparatus may include a communication module and a processing module. For example, the processing module is configured to determine information about an AI model of an AI service based on request information, where the AI model includes N sub-network models, the N sub-network models respectively correspond to N model identifiers IDs, the information about the AI model includes model files of X sub-network models in the N sub-network models, N and X are positive integers, N is greater than 1, and X is less than or equal to N; and the communication module is configured to send the information about the AI model.

In a possible design, the N sub-network models include Y backbone network models and (N-Y) functional network models, and Y is a positive integer.

In a possible design, the communication module is further configured to: receive, from a first communication apparatus, model identifiers IDs of the X sub-network models or indexes corresponding to the model IDs of the X sub-network models; or receive, from the first communication apparatus, model identifiers IDs of (N-X) sub-network models other than the X sub-network models in the N sub-network models or indexes corresponding to the model identifiers IDs of the (N-X) sub-network models.

In a possible design, the communication module is further configured to: send information about the N sub-network models to the first communication apparatus, where the information about the N sub-network models includes the model IDs of the N sub-network models or indexes corresponding to the AI model; or send, to the first communication apparatus, the model IDs of the (N-X) sub-network models other than the X sub-network models in the N sub-network models.

In a possible design, the communication module is further configured to receive one or a combination of the following information from the first communication apparatus: a service type of the AI service, a dataset type, a data type, or a computing resource, where the one or a combination of the service type of the AI service, the dataset type, the data type, or the computing resource is used to determine the model IDs of the N sub-network models.

In a possible design, the processing module is further configured to determine the model IDs of the N sub-network models.

When determining the model IDs of the N sub-network models, the processing module is configured to: determine a model ID group of a first sub-network model in the N sub-network models based on a communication scenario of the AI service; and determine a model ID of the first sub-network model, where the model ID of the first sub-network model is one model ID in the model ID group.

In a possible design, a difference between accuracy rates of two models corresponding to any two model IDs in the model ID group is less than a specified threshold or the accuracy rates are both within a specified range.

In a possible design, the model ID includes or indicates the following information: a model type of a sub-network model, a dataset type of the sub-network model, a data type of the sub-network model, a network layer number of the sub-network model, a backbone network type of the sub-network model, a backbone network dataset type of the sub-network model, a backbone network data type of the sub-network model, a backbone network layer number of the sub-network model, or a computing resource type of the sub-network model.

In a possible design, the model ID is included in a packet header format; or the model ID is information obtained according to a mapping function, an input of the mapping function is information indicated by the model ID, and an output of the mapping function is the model ID.

For beneficial effects of the fifth aspect and the possible designs, refer to descriptions of corresponding parts in the second aspect. Details are not described herein again.

According to a sixth aspect, a communication apparatus is provided. The apparatus may be a first communication apparatus, or may be an apparatus (for example, a chip, a chip system, or a circuit) located in the first communication apparatus, or may be an apparatus that can be used in a match with the first communication apparatus. The first communication apparatus may be a terminal device or may be a network device. The apparatus has a function of implementing the method in any one of the first aspect or the possible designs of the first aspect. The function may be implemented by hardware, or may be implemented by hardware executing corresponding software. The hardware or software includes one or more modules corresponding to the foregoing functions. In a design, the apparatus may include a communication module and a processing module.

The communication module is configured to receive information about an AI model of an AI service from a second communication apparatus, where the AI model includes N sub-network models, the N sub-network models respectively correspond to N model identifiers IDs, the information about the AI model includes model files of M2 sub-network models in the N sub-network models, N and M2 are positive integers, N is greater than 1, and M2 is less than or equal to N.

The processing module is configured to process a first part of the AI service based on M sub-network models, where the M sub-network models are M1 sub-network models that already exist locally in the first communication apparatus and the M2 sub-network models.

Optionally, the communication module is configured to send request information to the second communication apparatus, where the request information is used to request the artificial intelligence AI service.

According to a seventh aspect, a communication apparatus is provided. The apparatus may be a second communication apparatus, or may be an apparatus (for example, a chip, a chip system, or a circuit) located in the second communication apparatus, or may be an apparatus that can be used in a match with the second communication apparatus. The second communication apparatus may be a terminal device or may be a network device. The apparatus has a function of implementing the method in any one of the second aspect or the possible designs of the second aspect. The function may be implemented by hardware, or may be implemented by hardware executing corresponding software. The hardware or software includes one or more modules corresponding to the foregoing functions. In a design, the apparatus may include a communication module and a processing module.

For example, the communication module is further configured to send information about an AI model of an AI service to a first communication apparatus, where the AI model includes N sub-network models, the N sub-network models respectively correspond to N model identifiers IDs, the information about the AI model includes model files of M2 sub-network models in the N sub-network models, N and M2 are positive integers, N is greater than 1, and M2 is less than or equal to N.

Optionally, the processing module is configured to process a second part of the AI service based on a sub-network model other than the M sub-network models in the N sub-network models.

Optionally, the communication module is further configured to receive request information from the first communication apparatus, where the request information is used to request the artificial intelligence AI service.

Optionally, the communication module is further configured to send a processing result of the second part of the AI service to the first communication apparatus.

For beneficial effects of the sixth aspect, the seventh aspect, and the possible designs, refer to descriptions of corresponding parts in the third aspect. Details are not described herein again.

According to an eighth aspect, an embodiment of this application provides a communication apparatus. The apparatus includes a communication interface and a processor. The communication interface is used by the apparatus to communicate with another device, for example, receive and send data or a signal. For example, the communication interface may be a transceiver, a circuit, a bus, a module, or another type of communication interface, and the another device may be another communication apparatus. The processor is configured to invoke a group of programs, instructions, or data, to perform the method described in the first aspect or the possible designs of the first aspect, or perform the method performed by the first communication apparatus in the third aspect. The apparatus may further include a memory, configured to store the programs, the instructions, or the data that are invoked by the processor. The memory is coupled to the processor. When executing the instructions or data stored in the memory, the processor may implement the method described in the first aspect or the possible designs of the first aspect, or may implement the method performed by the first communication apparatus in the third aspect.

According to a ninth aspect, an embodiment of this application provides a communication apparatus. The apparatus includes a communication interface and a processor. The communication interface is used by the apparatus to communicate with another device, for example, receive and send data or a signal. For example, the communication interface may be a transceiver, a circuit, a bus, a module, or another type of communication interface, and the another device may be another communication apparatus. The processor is configured to invoke a group of programs, instructions, or data, to perform the method described in the second aspect or the possible designs of the second aspect; or perform the method performed by the second communication apparatus in the third aspect. The apparatus may further include a memory, configured to store the programs, the instructions, or the data that are invoked by the processor. The memory is coupled to the processor. When executing the instructions or data stored in the memory, the processor may implement the method described in the second aspect or the possible designs of the second aspect, or may implement the method performed by the second communication apparatus in the third aspect.

According to a tenth aspect, an embodiment of this application further provides a computer-readable storage medium. The computer-readable storage medium stores computer-readable instructions, and when the computer-readable instructions are run on a computer, the method in the aspects or the possible designs of the aspects is performed.

According to an eleventh aspect, an embodiment of this application provides a chip system. The chip system includes a processor, and may further include a memory, configured to implement the method in the first aspect or the possible designs of the first aspect, or configured to implement the method performed by the first communication apparatus in the third aspect. The chip system may include a chip, or may include a chip and another discrete component.

According to a twelfth aspect, an embodiment of this application provides a chip system. The chip system includes a processor, and may further include a memory, configured to implement the method in the second aspect or the possible designs of the second aspect, or configured to implement the method performed by the second communication apparatus in the third aspect. The chip system may include a chip, or may include a chip and another discrete component.

According to a thirteenth aspect, a computer program product including instructions is provided. When the computer program product runs on a computer, the method in the foregoing aspects or the possible designs of the aspects is performed.

In embodiments of this application, in-depth perception is performed on the AI service, the plurality of sub-network models required by the AI service model may be determined based on the service requirement, and each sub-network model is ID-based. In the network, the model provider may quickly provide, based on the sub-network model ID, the plurality of sub-network models required by the AI service for the model requester. The model requester forms the complete AI service model based on the sub-network model that already exists locally and the sub-network model provided by the model provider, and finally the complete AI service model is used for AI application. In addition, after the AI service is divided to obtain the plurality of sub-network models, one AI service can be jointly processed (training/inference) by both the model requester and the network side. In other words, some sub-network models are located on the model requester side, and the other sub-network models are located on the network side. In this way, not all model information of the AI service is sent to the model requester, to reduce unnecessary transmission load.

## BRIEF DESCRIPTION OF DRAWINGS

FIG. 1 is a schematic diagram of a system architecture according to an embodiment of this application;
FIG. 2 is a schematic diagram of a communication system architecture according to an embodiment of this application;
FIG. 3a is a schematic diagram of AI model training and AI inference according to an embodiment of this application;
FIG. 3b is a schematic diagram of a structure of a neural network model according to an embodiment of this application;
FIG. 4 is a schematic diagram of an application method of an AI model identifier according to an embodiment of this application;
FIG. 5a is a schematic diagram 1 of a sub-network model of an AI model according to an embodiment of this application;
FIG. 5b is a schematic diagram 2 of a sub-network model of an AI model according to an embodiment of this application;
FIG. 5c is a schematic diagram 3 of a sub-network model of an AI model according to an embodiment of this application;
FIG. 6 is a schematic diagram of a generation process of a model identifier according to an embodiment of this application;
FIG. 7 is a schematic flowchart of an application method of an AI model identifier in an application scenario 1 according to an embodiment of this application;
FIG. 8 is a schematic flowchart of an application method of an AI model identifier in an application scenario 2 according to an embodiment of this application;
FIG. 9 is a schematic flowchart of an application method of an AI model identifier in an application scenario 3 according to an embodiment of this application;
FIG. 10 is a schematic flowchart of an application method of an AI model identifier in an application scenario 4 according to an embodiment of this application;
FIG. 11 is a schematic flowchart of an application method of an AI model identifier in an application scenario 5 according to an embodiment of this application;
FIG. 12 is a schematic flowchart of an application method of an AI model identifier in an application scenario 6 according to an embodiment of this application;
FIG. 13 is a schematic diagram of a structure of a communication apparatus according to an embodiment of this application; and
FIG. 14 is a schematic diagram of a structure of another communication apparatus according to an embodiment of this application.

## DESCRIPTION OF EMBODIMENTS

This application provides a communication method using artificial intelligence and a communication apparatus, to better apply an AI model. The method and the apparatus are based on a same technical idea. Because a problem-resolving principle of the method is similar to a problem-resolving principle of the apparatus, mutual reference may be made to implementation of the apparatus and the method. Details are not described herein again.

In descriptions of embodiments of this application, the term "and/or" describes an association relationship between associated objects and indicates that three relationships may exist. For example, A and/or B may indicate the following three cases: Only A exists, both A and B exist, and only B exists. The character "/" generally indicates an "or" relationship between the associated objects. In the descriptions of this application, terms such as "first" and "second" are only for distinction and description, but cannot be understood as indicating or implying relative importance, or as indicating or implying an order.

The following describes in detail embodiments of this application with reference to accompanying drawings.

An application method of an artificial intelligence model identifier provided in embodiments of this application may be applied to a 5G communication system, for example, a 5G new radio (new radio, NR) system, and may be applied to various application scenarios of the 5G communication system, for example, enhanced mobile broadband (enhanced mobile broadband, eMBB), ultra-reliable low-latency communication (ultra-reliable low-latency communication, URLLC), and enhanced machine-type communication (enhanced machine-type communication, eMTC). The application method of an artificial intelligence model identifier provided in embodiments of this application may also be applied to various future evolved communication systems, for example, a sixth generation (6th generation, 6G) communication system, or a space-air-ground integrated communication system. The application method of an artificial intelligence model identifier provided in embodiments of this application may be further applied to communication between base stations, communication between terminal devices, communication of internet of vehicles, internet of things, industrial internet, satellite communication, and the like. For example, the method may be applied to a device-to-device (Device-to-Device, D2D), vehicle-to-everything (vehicle-everything, V2X), or machine-to-machine (machine, M2M) communication system.

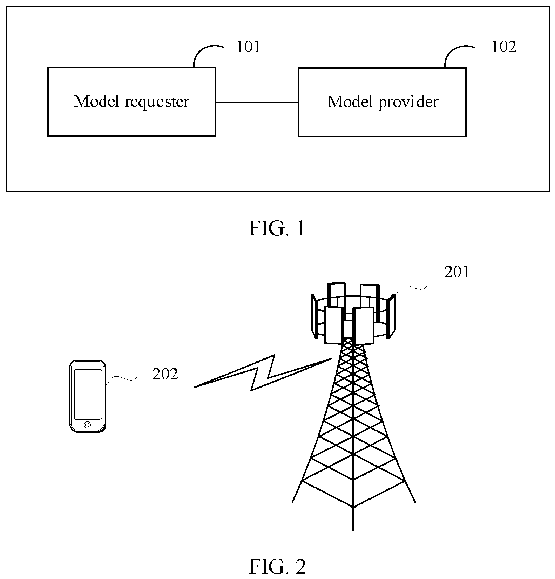

FIG. 1 shows a system architecture applicable to an embodiment of this application, including a model requester 101 and a model provider 102. The model provider 102 may provide a model file required by the model requester 101 for the model requester 101. The model requester 101 may be a terminal device or may be a network device. The model provider 102 may be a network device. The following uses examples to describe possible implementation forms and functions of the terminal device and the network device in embodiments of this application.

As shown in FIG. 2, a communication system architecture includes a network device 201 and a terminal device 202. The network device 201 provides a service for the terminal device 202 in a coverage area. The network device 201 provides wireless access for one or more terminal devices 202 in the coverage area of the network device 201.

The network device 201 is a node in a radio access network (radio access network, RAN), and may also be referred to as a base station, or may be referred to as a RAN node (or a device). Currently, some examples of the network device 201 are a next-generation NodeB (next-generation NodeB, gNB), a next-generation evolved NodeB (next-generation evolved NodeB, Ng-eNB), a transmission reception point (transmission reception point, TRP), an evolved NodeB (evolved NodeB, eNB), a radio network controller (radio network controller, RNC), a NodeB (NodeB, NB), abase station controller (base station controller, BSC), abase transceiver station (base transceiver station, BTS), a home base station (for example, a home evolved NodeB, or a home NodeB, HNB), a baseband unit (baseband unit, BBU), or a wireless fidelity (wireless fidelity, Wi-Fi) access point (access point, AP). The network device 201 may alternatively be a satellite, and the satellite may also be referred to as a high-altitude platform, a high-altitude aircraft, or a satellite base station. Alternatively, the network device 201 may be another device that has a function of the network device. For example, alternatively, the network device 201 may be a device that has a function of a network device in device-to-device (device to device, D2D) communication, or internet of vehicles or machine-to-machine (machine to machine, M2M) communication. Alternatively, the network device 201 may be any possible network device in a future communication system. In some deployments, the network device 201 may include a central unit (central unit, CU) and a distributed unit (distributed unit, DU). The network device may further include an active antenna unit (active antenna unit, AAU). The CU implements some functions of the network device, and the DU implements some other functions of the network device. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The terminal device 202 is also be referred to as user equipment (user equipment, UE), a mobile station (mobile station, MS), a mobile terminal (mobile terminal, MT), or the like, and is a device that provides a user with a voice and/or data connectivity. For example, the terminal device 202 includes a handheld device, a vehicle-mounted device, and the like that have a wireless connection function. If the terminal device 202 is located in a vehicle (for example, placed in the vehicle or installed in the vehicle), the terminal device 202 may be considered as a vehicle-mounted device, and the vehicle-mounted device is also referred to as an on board unit (on Board unit, OBU). Currently, the terminal device 202 may be a mobile phone (mobile phone), a tablet computer, a notebook computer, a palmtop computer, a mobile internet device (mobile internet device, MID), a wearable device (for example, a smart watch, a smart band, or a pedometer), a vehicle-mounted device (for example, the vehicle-mounted device on an automobile, a bicycle, an electric vehicle, an aircraft, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, an intelligent robot, a hot balloon, an uncrewed aerial vehicle, or an aircraft), or the like. Alternatively, the terminal device 202 may be another device that has a function of the terminal device. For example, the terminal device 202 may be a device that has a function of a terminal device in device-to-device (device to device, D2D) communication, internet of vehicles, or machine-to-machine (machine-to-machine, M2M) communication. Particularly, when communication is performed between network devices, a network device that has a function of the terminal device may also be considered as the terminal device.

By way of example but not limitation, in embodiments of this application, the terminal device 202 may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

In embodiments of this application, an apparatus configured to implement a function of the terminal device 202 is, for example, a chip, a radio transceiver, or a chip system. The apparatus configured to implement the function of the terminal device 202 may be installed, disposed, or deployed in the terminal device 202.

To help a person skilled in the art better understand the solutions provided in embodiments of this application, several concepts or terms in this application are first explained and described.


1. AI technology


AI is a technology capable of simulating human cognition through machines. A core capability of AI is to make judgments or predictions based on given inputs. An AI application can be divided into four parts: perception capability, cognitive capability, creativity, and intelligence. The perception capability includes, for example, image recognition, facial recognition, speech recognition, natural language processing, machine translation, or text conversion. The cognitive capability includes, for example, spam recognition, credit risk analysis, intelligent natural disaster prediction and prevention, AI-based go, or machine learning. The creativity includes, for example, AI composition, AI painting, or AI design. The intelligence refers to an ability to explore true truths, identify right and wrong, and guide human beings to live a meaningful life by deeply understanding truths of people, events, or things. This field involves human self-awareness, self-cognition, and values, and is the most difficult field for human beings to imitate.

Each AI application needs to undergo two important processes: AI model training and AI inference.

The AI model training may also be referred to as modeling, and refers to performing exploration and analysis on prepared data by using analysis means, methods, and skills, to discover a causal relationship, an internal relationship, and a service rule, and provide decision-making reference for the AI application. In other words, training is performed based on existing data or test data to obtain a satisfactory model. The AI model training may include the following steps: (1) Collect training data. In different application scenarios, the training data may be an image, a voice, or a text, and most AI models need to label the collected data. (2) Train a model. Loading a basic AI model and training based on the collected data for a long time require powerful computing and storage resources, for example, a central control unit (central processing unit, CPU)/microprocessor (graphics processing unit, GPU)/field programmable gate array (field programmable gate array, FPGA), to obtain a final AI model. Generally, the satisfactory AI model cannot be obtained through training of the AI model once. A parameter and/or data of an algorithm need/needs to be repeatedly adjusted and continuously evaluated, to obtain the satisfactory AI model through training. An evaluation criteria may be a precision rate and/or a recall rate.

The AI inference refers to applying an AI model to formal actual data or new generated data for prediction and evaluation, and applying prediction and evaluation results to various fields. A process of the AI inference may include the following steps: (1) Obtain service data. New data is obtained through an external device. For example, image information or data information is obtained by using a camera or a lidar. (2) Inference Based on a trained AI model and the obtained new data, real-time inference is performed to obtain a result, and the result is used in various AI applications, such as facial recognition, industrial detection, and self driving. The process of the AI inference may also need a large quantity of computing/storage resources.

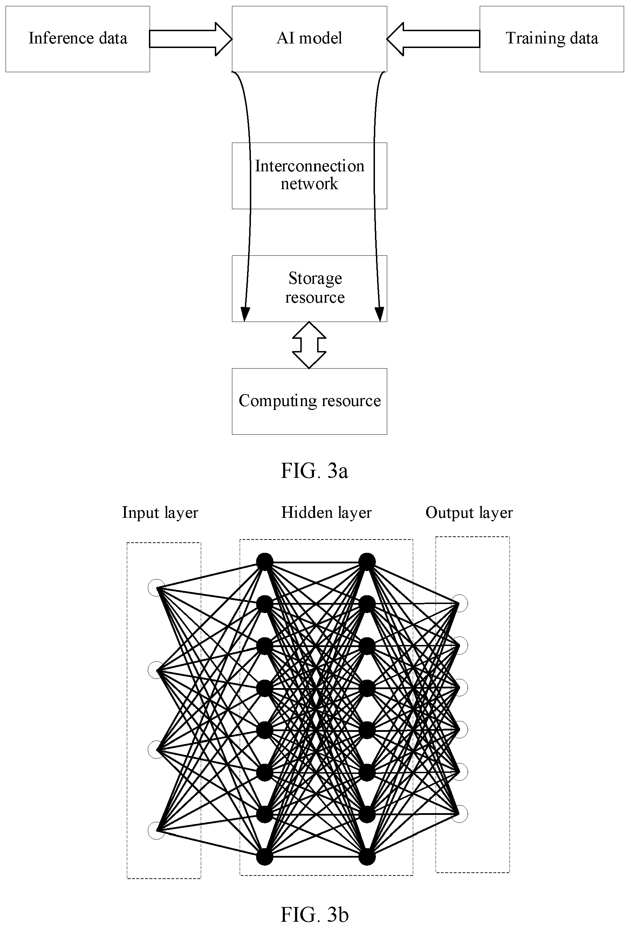

FIG. 3a is a schematic diagram of AI model training and AI inference. Training data is input to a basic AI model for training to obtain a satisfactory AI model. Inference data is input to a trained AI model for prediction and evaluation to obtain an inference result. Both a process of the AI model training and a process of the AI inference need a large quantity of computing and storage resources. In a possible design, the computing resource and the storage resource may be heterogeneous, for example, a CPU, a GPU, or an FPGA. The computing resource and the storage resource may be in a form of a network device, a terminal device, a cloud (cloud) computing node, or mobile edge computing (mobile edge computing, MEC). The computing resource and the storage resource may be interconnected with the AI model through a network, and the network may be the Ethernet, a wireless network, or an infiniband (infiniband, IB). During the AI model training and the AI inference, data arrangement during storage and calculation of the AI model needs to be considered.

2. AI model

There are various AI models. Different application scenarios may use different AI models.

The AI model may be implemented based on a neural network model. An artificial neural network (artificial neural network, ANNs) model is also called a neural network (NN) model or a connection model (connection model). The neural network model is a typical representative of the AI model. The neural network model is a mathematical calculation model that imitates a behavior feature of a human brain neural network and performs distributed parallel information processing. A main task of the neural network model is to build a practical artificial neural network based on an application requirement by referring to a principle of the human brain neural network, implement a learning algorithm design suitable for the application requirement, simulate an intelligent activity of the human brain, and then solve practical problems technically. The neural network implements, based on complexity of a network structure, a corresponding learning algorithm design by adjusting an interconnection relationship between a large quantity of internal nodes.

One neural network model may include a plurality of neural network layers with different functions, where each layer includes a parameter and a calculation formula. Different layers in the neural network model have different names based on different calculation formulas or different functions. For example, a layer for convolution calculation is referred to as a convolution layer, and the convolution layer is usually used to perform feature extraction on an input signal (for example, an image). One neural network model may alternatively include a combination of a plurality of existing neural network models. Neural network models of different structures may be used for different scenarios (for example, classification and recognition) or provide different effects when used for a same scenario. That structures of neural network models are different is mainly reflected in one or more of the following: quantities of network layers in the neural network models are different, sequences of the network layers are different, and weights, parameters, or calculation formulas of the network layers are different. The neural network may include a neuron. The neuron may be an operation unit that uses $x_s$ and an intercept of 1 as an input. An output of the operation unit may be shown as a formula (1):

$$ h_{W,b}(x) = f(W^T x) = f\left(\sum_{s=1}^{n} W_s x_s + b\right) \quad (1) $$

s=1, 2, ..., and n, n is a natural number greater than 1, $W_s$ is a weight of $x_s$, b is a bias of the neuron. *f* is an activation function (activation function) of the neuron, and is used to introduce a nonlinear feature into the neural network, to convert the input signal in the neuron into an output signal. The output signal of the activation function may be used as an input of a next convolution layer, and the activation function may be a sigmoid function, a ReLU function, a tanh function, or the like. The neural network is a network formed by connecting a plurality of single neurons together. To be specific, an output of a neuron may be an input of another neuron. An input of each neuron may be connected to a local receptive field of a previous layer to extract a feature of the local receptive field. The local receptive field may be a region including several neurons.

A multilayer perceptron (multilayer perceptron, MLP) is one of feedforward neural network models. The MLP includes a plurality of network layers with different functions: one input layer, one output layer, and one or more hidden layers. The one or more hidden layers are located between the input layer and the output layer, and a quantity of the hidden layers in the MLP may be determined based on an application requirement. In the MLP, information is transmitted unidirectionally, that is, information starts to move forward from the input layer, then is transmitted layer by layer in the one or more hidden layers, and then is transmitted from the last hidden layer to the output layer.

FIG. 3b shows an example of a structure of a neural network model.

As shown in FIG. 3b, the input layer includes a plurality of neurons. The neuron at the input layer is also referred to as an input node. The input node is configured to receive an input vector input from the outside, and transfer the input vector to a neuron at a hidden layer connected to the input node. The input node does not perform a calculation operation.

As shown in FIG. 3b, the hidden layer includes a plurality of neurons. The neuron at the hidden layer is also referred to as a hidden node. The hidden node is configured to extract a feature of an input vector based on the input vector input to the hidden layer, and transfer the feature to a neuron at a lower layer. In addition, an implementation of extracting the feature by the hidden node is: determining an output vector of the hidden node based on an output vector of a neuron located at an upper layer and a weight value of a connection between the hidden node and the neuron at the upper layer and according to an input/output relationship of the hidden node. The upper layer is a network layer that sends input information to the hidden layer at which the hidden node is located, and the lower layer is a network layer that receives output information of the hidden layer at which the hidden node is located.

As shown in FIG. 3b, the output layer includes one or more neurons. The neuron at the output layer is also referred to as an output node. The output node may determine an output vector of the output node based on an input/output relationship of the output node, an output vector of a hidden node connected to the output node, and a weight value between the hidden node connected to the output node and the output node, and transfer the output vector to the outside.

Adjacent layers of the multilayer perceptron are fully connected, that is, for any two adjacent layers, any neuron at an upper layer is connected to all neurons at a lower layer. In addition, weights are configured for connections between neurons at adjacent layers.

The AI model includes a network structure, and the network structure is, for example, a structure of the neural network model. The AI model further includes a parameter (for example, a weight and an offset) corresponding to the network structure, may further include code, and may further include a configuration, for example, a learning rate, a model internal parameter, or another configurable variable. Therefore, a model file of the AI model is large. For example, a lightweight large mobile network version 3 (MobileNet V3-large) model used for a mobile terminal corresponds to about 5.4 million parameters, and the file is about 20 MB to 30 MB. However, a generative pre-trained transformer 3 (generative pre-trained transformer 3, GPT-3) of the OpenAI includes about 175 billion parameters, and a file size exceeds 350 GB.

As AI service requirements instantly increase, a quantity of AI models also keeps increasing. With emergence of new services, a new network structure of the AI model is to emerge. For one type of network structure, there may be models with different layers, to pursue ultimate performance of this type of network structure. For different service requirements, different performance requirements may lead to different network structure precision. With more AI development, new AI frameworks are to be generated, and formats of the AI model may be different. For more service types, there are more datasets, and different AI models are generated.

In conclusion, the quantity of AI models is increasing, and the model file is also large, so that management, deployment, and application of the AI models are also facing great challenges.

In an embodiment, a model requester sends request information to a model provider, the model provider provides, to the model requester based on the request information, a model file of an AI service requested by the model requester, and the model requester performs AI application based on the obtained model file. In this embodiment, the model provider needs to provide all model files of the AI service for the model requester, and the model requester also needs to store all the model files corresponding to the AI service. In this way, transmission and storage of the large quantity of model files cause a waste of computing resources, storage resources, and transmission resources. However, in actual application, AI models corresponding to some AI services each may be divided into a plurality of independent sub-network structures, and the independent sub-network structure in a network may be shared in different AI services. Based on this, an embodiment of this application provides an application method of an AI model identifier, to map an AI model of an AI service to a plurality of independent sub-network structures for management, to improve management performance of the AI model in a network, for example, improve utilization of query, storage, and transmission resources.

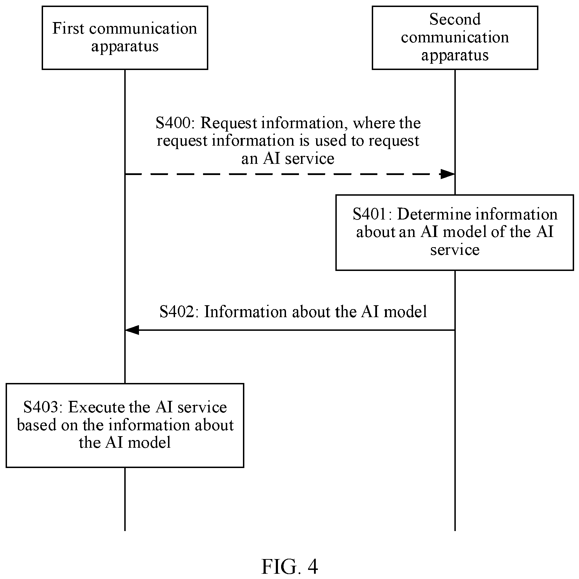

As shown in FIG. 4, a specific procedure of an application method of an AI model identifier according to an embodiment of this application is as follows. The method may be performed by using a first communication apparatus and a second communication apparatus. The first communication apparatus may be a model requester, and the second communication apparatus may be a model provider. The first communication apparatus may be a terminal device, or may be an apparatus (for example, a chip, a chip system, or a circuit) in the terminal device, or may be an apparatus that can be used in a match with the terminal device. Alternatively, the first communication apparatus may be a network device, or may be an apparatus (for example, a chip, a chip system, or a circuit) in the network device, or may be an apparatus that can be used in a match with the network device. The second communication apparatus may be a network device, or may be an apparatus (for example, a chip, a chip system, or a circuit) in the network device, or may be an apparatus that can be used in a match with the network device.

S401: The second communication apparatus determines information about an AI model of an AI service.

The AI model includes N sub-network models, and the information about the AI model includes model files of X sub-network models in the N sub-network models, where N and X are positive integers, N is greater than 1, and X is less than or equal to N.

S402: The second communication apparatus sends the information about the AI model, and correspondingly, the first communication apparatus receives the information about the AI model.

S403: The first communication apparatus executes the AI service based on the information about the AI model.

Optionally, before S401, S400 may be further included.

S400: The first communication apparatus sends request information to the second communication apparatus, where the request information is used to request the AI service. Correspondingly, the second communication apparatus receives the request information of the first communication apparatus.

In the embodiment in FIG. 4, the AI model is divided into the N sub-network models, to improve management performance of the AI model in a network, for example, improve utilization of query and storage resources. The model file of the sub-network model of the AI service is transmitted, so that utilization of transmission resources can be improved.

The following uses an example to describe a possible implementation of the embodiment in FIG. 4.

In this embodiment of this application, the AI model has a model type. When the AI model includes the N sub-network models, each sub-network model also has a model type. The model type of the AI model or the model type of the sub-network model may be, for example, the following several types: a residual network (residual network, ResNet), a feature pyramid network (feature pyramid networks, FPN), a region proposal network (region proposal network, RPN), a classifier network (classifier-NET), a mask network (mask network, Mask-NET), a visual geometry group (visual geometry group, VGG), a Google inception network (Google inception network, GoogLeNet), an Alex network (AlexNet, Alex is a name), or a mobile network (mobileNet).

Model types of the N sub-network models included in the AI model may be different. The AI model may include a plurality of sub-network models, and model types of the plurality of sub-network models may be different.

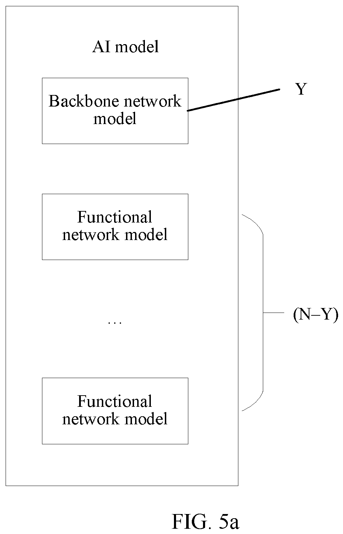

The N sub-network models included in the AI model may be classified into a backbone network model and a functional network model. The backbone network model may be used to extract a feature. For example, network models such as ResNet, VGG, MobileNet, GoogleNet, and AlexNet each have a feature extraction capability, and therefore may be used as the backbone network model. The functional network model may be used to be responsible for another function. As shown in FIG. 5a, the N sub-network models include Y backbone network models and (N-Y) functional network models, where Y is a positive integer, and 1≤Y≤N. For example, when a value of Y is 1, the N sub-network models include one backbone network model and (N-1) functional network models. Alternatively, the AI model may have only one model type, that is, the backbone network model. It may be considered that the AI model includes one sub-network model, or the AI model cannot be divided into a plurality of sub-network models.

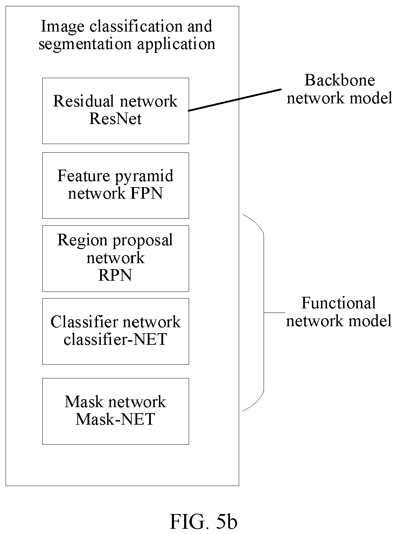

For example, as shown in FIG. 5b, the AI service is an image classification and segmentation application. Specifically, the image classification and segmentation application is a mask region-based convolutional neural network (mask region-based convolutional network, Mask-RCNN). An AI model of the AI service includes five sub-network models, including one backbone network model and four functional network models. The five sub-network models are ResNet, FPN, RPN, Classifier-NET, and Mask-NET. ResNet is the backbone network model and is used as a feature extractor. FPN, RPN, Classifier-NET, and Mask-NET are the functional network models. FPN is used to extend a backbone network and can better represent a target on a plurality of scales. RPN determines a region of interest. Classifier-NET classifies the target. Mask-NET segments the target.

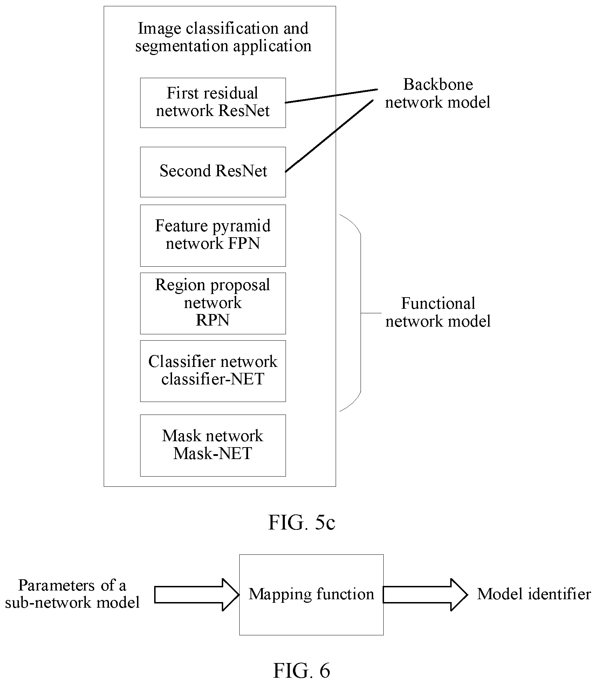

For another example, as shown in FIG. 5c, the AI service is an image classification and segmentation application Mask-RCNN. An AI model of the AI service includes six sub-network models, including two backbone network models and four functional network models. The two backbone network models are a first ResNet and a second ResNet, and the four functional network models are FPN, RPN, Classifier-NET, and Mask-NET. The first ResNet is used for feature extraction, and the second ResNet is used for further feature extraction on a result obtained after the feature extraction of the first ResNet. FPN is used to extend a backbone network and can better represent a target on a plurality of scales. RPN determines a region of interest. Classifier-NET classifies the target. Mask-NET segments the target.

In this embodiment of this application, the AI model or the sub-network model may have a corresponding model identifier (identifier, ID), and the model identifier of the AI model is used to identify a corresponding AI model. The model identifier of the sub-network model is used to identify a corresponding sub-network model, and the model identifier corresponding to the sub-network model may be used to distinguish different sub-network models. For example, an identifier 1 corresponds to a sub-network model 1, and an identifier 2 corresponds to a sub-network model 2.

The AI model of the AI service in the embodiment in FIG. 4 includes the N sub-network models, and the N sub-network models may correspond to N IDs.

The following describes an optional implementation of the model identifier.

The model identifier may include or indicate information about the sub-network model. For example, the model identifier may include or indicate a model type of the sub-network model.

The information about the sub-network model may further include one or more of the following: a model type of the sub-network model, a dataset type of the sub-network model, a data type of the sub-network model, a network layer number of the sub-network model, a backbone network type of the sub-network model, a backbone network dataset type of the sub-network model, a backbone network data type of the sub-network model, a backbone network layer number of the sub-network model, or a computing resource type of the sub-network model.

In an implementation 1, the model identifier may be included in a packet header format, and the model identifier is represented in a form of the packet header format. The packet header format may use, for example, a packet header in a modeled TCP format. Each piece of information included or indicated by the model identifier occupies a bit (bit) in the packet header. Specifically, a quantity of bits occupied by each piece of information included or indicated by the model identifier is not limited in this application. The following uses an example to describe the model identifier in the packet header format.

As shown in Table 1a, the model identifier in the packet header format includes or indicates a plurality of pieces of information. It is assumed that the model identifier occupies 128 bits. A model type (model type) may occupy 16 bits. A dataset type (dataset type) may occupy 8 bits. A data type (data type) may occupy 8 bits. A network layer (network layer) number may occupy 16 bits. A backbone network type (backbone network type) may occupy 16 bits. A backbone network dataset type (backbone network dataset type) may occupy 8 bits. A backbone network data type (backbone network data type) may occupy 8 bits. A backbone network layer (backbone network layer) number may occupy 16 bits. A computing resource type (computing resource type) may occupy 8 bits. The model identifier may further include a reserved region, that is, an extended region. For example, the reserved (reserved) region occupies 16 bits. Optionally, the model identifier may further include or indicate model file information (model files info). For example, the model file information occupies 8 bits.

**Table 1a**

| Model type (16 bits) | Dataset type (8 bits) | Data type (8 bits) |
|---|---|---|
| Network layer number (16 bits) | Backbone network type (16 bits) | Backbone network dataset type (8 bits) |
| Backbone network data type (8 bits) | Backbone network layer number (16 bits) | Model file information (8 bits) |
| Computing resource type (8 bits) | Reserved (reserved, 16 bits) | |

A rule of each piece of information included or indicated by the model identifier may be predefined according to a protocol. The following may use an example to describe the rule of each piece of information included or indicated by the model identifier. For example,
Model type: If the model type occupies n1 bits, it may represent $2^{n1}$ model types. An $i^{th}$ model type is represented by a binary of i, where i=0, 1, ..., $2^{n1}$. Alternatively, the $i^{th}$ model type is represented by a binary of i-1, where i=1, 2, ..., $2^{n1}$-1. For example, a first model type is represented by a binary of 0, a second model type is represented by a binary of 1, and a third model type is represented by a binary of 2. This model type is a model type of a backbone network or may be a model type of a functional network.

For example, VGG is represented by a binary of 0, ResNet is represented by a binary of 1, MobileNetV 1 is represented by a binary of 2, MobileNetV2 is represented by a binary of 3, MobileNetV3-Large is represented by a binary of 4, MobileNetV3-small is represented by a binary of 5, GoogleNet is represented by a binary of 6, FPN is represented by a binary of 7, and RPN is represented by a binary of 8.

Dataset type: If the dataset type occupies n2 bits, it may represent $2^{n2}$ model types. An $i^{th}$ dataset type is represented by a binary of i, where i=0, 1, ..., $2^{n2}$. Alternatively, the $i^{th}$ dataset type is represented by a binary of i-1, where i=1, 2, ..., $2^{n2}$-1. For example, a first dataset type is represented by a binary of 0, a second dataset type is represented by a binary of 1, and a third dataset type is represented by a binary of 2.

For example, ImageNet is represented by a binary of 0, MS COCO is represented by a binary of 1, ML-images is represented by a binary of 2, and JFT-300M is represented by a binary of 3.

Data type: If the data type occupies n3 bits, it may represent $2^{n2}$ model types. An $i^{th}$ data type is represented by a binary of i, where i=0, 1, ..., $2^{n3}$. Alternatively, the $i^{th}$ data type is represented by a binary of i-1, where i=1, 2, ..., $2^{n3}$-1. For example, a first data type is represented by a binary of 0, a second data type is represented by a binary of 1, and a third data type is represented by a binary of 2.

For example, float64 is represented by a binary of 0, float32 is represented by a binary of 1, float16 is represented by a binary of 2, int8 is represented by a binary of 3, and int4 is represented by a binary of 4. Float is a data type and indicates a floating point number, float64 indicates a 64-bit floating point, and float32 indicates a 32-bit floating point. int8 indicates an 8-digit integer. Precision varies according to the type. A larger quantity of bits indicates higher precision.

Network layer number: The network layer number may be represented by a binary of an actual layer number. Alternatively, if a sub-network model of the first model type has five network layer numbers, binaries of 0, 1, 2, 3, and 4 respectively represent the five network layer numbers. For example, network layer numbers of ResNet of the first model type are 18, 34, 50, 101, and 152, which may be respectively represented by binaries of 0, 1, 2, 3, and 4, or may be directly represented by actual layer numbers 18, 34, 50, 101, and 152. A layer number of a network structure of another model type is represented in a similar manner as that of ResNet. If the AI model has only one network layer number, default (default) t0 is used.

Backbone network type: The AI model includes a plurality of sub-network models (a backbone network+a functional network). If there are a plurality of backbone networks, the backbone network type herein is a first backbone network type. If there is only one backbone network, the backbone network type herein is the one backbone network type. If the backbone network is consistent with a model type of a sub-network model indicated by the model identifier, that is, the sub-network model is the backbone network, default0 is used. If the model type of the sub-network model indicated by the model identifier is not the backbone network model, the backbone network model may be represented by using the following rule: if the backbone network type occupies n4 bits, it may represent $2^{n4}$ model types. An $i^{th}$ model type is represented by a binary of i, where i=0, 1, ..., $2^{n4}$. Alternatively, the $i^{th}$ model type is represented by a binary of i-1, where i=1, 2, ..., $2^{n4}$-1. For example, ResNet is represented by a binary of 1, MobileNetV1 is represented by a binary of 2, MobileNetV2 is represented by a binary of 3, MobileNetV3-Large is represented by a binary of 4, MobileNetV3-small is represented by a binary of 5, GoogleNet is represented by a binary of 6, GhostNet is represented by a binary of 7, AlexNet is represented by a binary of 8, and VGG is represented by a binary of 9.

When there are a plurality of backbone network models, determining may be performed for the first backbone network model in the plurality of backbone network models. If the first backbone network model is consistent with a model type of a sub-network model indicated by the model identifier, default0 is used. If the model type of the sub-network model indicated by the model identifier is not the first backbone network model, a rule of the first backbone network model in the plurality of backbone network models may be similar to the rule of the foregoing backbone network model. The first backbone network model in the plurality of backbone network models may be represented by using the following rule: If the first backbone network type occupies n4 bits, it may represent $2^{n4}$ model types. An $i^{th}$ model type is represented by a binary of i, where i=0, 1, ..., $2^{n4}$. Alternatively, the $i^{th}$ model type is represented by a binary of i-1, where i=1, 2, ..., $2^{n4}$-1. For example, ResNet is represented by 1, MobileNetV1 is represented by 2, MobileNetV2 is represented by 3, MobileNetV3-Large is represented by 4, MobileNetV3-small is represented by 5, GoogleNet is represented by 6, GhostNet is represented by 7, AlexNet is represented by 8, and VGG is represented by 9.

Backbone network dataset type: The AI model includes a plurality of sub-network models (a backbone network+a functional network). If there are a plurality of backbone networks, the backbone network dataset type herein is a first backbone network dataset type. If there is only one backbone network, the backbone network dataset type herein is the one backbone network dataset type. If the backbone network is consistent with a model type of a sub-network model indicated by the model identifier, default0 is used. If the model type of the sub-network model indicated by the model identifier is not the backbone network model, a definition rule of the backbone network dataset type is consistent with that described in the foregoing "dataset type". For details, refer to the foregoing description. For example, ImageNet is represented by 0, MS COCO is represented by 1, ML-images is represented by 2, and JFT-300M is represented by 3. When there are a plurality of backbone network models, determining may be performed for the first backbone network model in the plurality of backbone network models. If a first backbone network model is consistent with a model type of a sub-network model indicated by the model identifier, information about the backbone network dataset type is default0. If the model type of the sub-network model indicated by the model identifier is not the first backbone network model, a definition rule of the backbone network dataset type is consistent with that described in the foregoing "dataset type". For details, refer to the foregoing description. Details are not described herein again.

Backbone network data type: The AI model includes a plurality of sub-network models (a backbone network+a functional network). If there are a plurality of backbone networks, the backbone network data type herein is a first backbone network data type. If there is only one backbone network, the backbone network data type herein is the one backbone network data type. If the backbone network is consistent with a model type of a sub-network model indicated by the model identifier, that is, the sub-network model is the backbone network, default0 is used. If the model type of the sub-network model indicated by the model identifier is not the backbone network model, a definition rule of the backbone network data type is consistent with that described in the foregoing "data type". For details, refer to the foregoing description. For example, float64 is represented by 0, float32 is represented by 1, float16 is represented by 2, int8 is represented by 3, and int4 is represented by 4. When there are a plurality of backbone network models, determining may be performed for the first backbone network model in the plurality of backbone network models. If a first backbone network model is consistent with a model type of a sub-network model indicated by the model identifier, information about the backbone network data type is default0. If the model type of the sub-network model indicated by the model identifier is not the first backbone network model, a definition rule of the backbone network data type is consistent with that described in the foregoing "data type". For details, refer to the foregoing description. Details are not described herein again.

Backbone network layer number: The AI model includes a plurality of sub-network models (a backbone network+a functional network). If there are a plurality of backbone networks, the backbone network layer number herein is a first backbone network layer number. If there is only one backbone network, the backbone network layer number herein is the one backbone network layer number. If the backbone network model is consistent with a model type of a sub-network model indicated by the model identifier, that is, the sub-network model is the backbone network, information is default0. If the model type of the sub-network model indicated by the model identifier is not the backbone network model, a definition rule of the backbone network layer number is consistent with that described in the foregoing "network layer number". For details, refer to the foregoing description. Details are not described herein again. When there are a plurality of backbone network models, determining may be performed for the first backbone network model in the plurality of backbone network models. If a first backbone network model is consistent with a model type of a sub-network model indicated by the model identifier, information is default0. If the model type of the sub-network model indicated by the model identifier is not the first backbone network model, a definition rule of the backbone network layer number is consistent with that described in the foregoing "network layer number". For details, refer to the foregoing description. Details are not described herein again.

It may be understood that, for the backbone network type, the backbone network dataset type, the backbone network data type, and the backbone network layer number, when there are the plurality of backbone network models, determining may be performed for the first backbone network model in the plurality of backbone network models, or determining may be performed for another specified backbone network model in the plurality of backbone network models, for example, a second backbone network model in the plurality of backbone network models.

Model file information: refers to which type of information that is about a sub-network model and that is included in a to-be-provided model file. The model file information may include a network structure, a model parameter (a weight, an offset, and the like), code, or a configuration. The model file information may be one or more of the foregoing examples. A model file that can be provided by one sub-network model can be determined. For example, one sub-network model can provide n6 model files. When required model files are all the n6 model files that can be provided by the sub-network model, the model file information may be represented by a binary of 0; when a required model file is a first model file in the n6 model files that can be provided by the sub-network model, the model file information may be represented by a binary of 1; when a required model file is a second model file in all the n6 model files that can be provided by the sub-network model, the model file information may be represented by a binary of 2, and the like. Certainly, the required model file is a combination of a plurality of model files in all the n6 model files that can be provided by the sub-network model.

For example, requiring all (All) the foregoing information combinations is represented by a binary of 0. Requiring the model file information to be a network structure (Network Structure) is represented by a binary of 1. Requiring the model file information to be a model parameter (Model Parameter) is represented by a binary of 2. Requiring the model file information to be code (Code) is represented by a binary of 3. Requiring the model file information to be a configuration (Config) is represented by a binary of 4. Requiring the model file information to be the network structure and the model parameter is represented by a binary of 5.

Computing resource type: supporting a first computing resource type is represented by a binary of 0, supporting a second computing resource type is represented by a binary of 1, supporting a third computing resource type is represented by a binary of 2, and the like. Certainly, a plurality of computing resource types may be supported, or may be represented.

For example, supporting a CPU is represented by 0, supporting a GPU is represented by 1, supporting an FPGA is represented by 2, supporting an NPU is represented by 3, supporting the CPU and the GPU is represented by 4, and supporting the CPU, the GPU, and the FPAG is represented by 5.

It may be understood that specific values of each of piece of information included or indicated by the model identifier are merely examples for descriptions. In actual application, another value may indicate each piece of information. The information included or indicated by the model identifier is also an example for the description, and the model identifier may also include or indicate other information.

The sub-network model ResNet in the Mask-RCNN is used as an example. Assuming that a dataset type of the sub-network model ResNet is MS COCO, a data type is float32, a network layer number is 101, a backbone network type is ResNet, model file information is all information combinations, and a computing resource type is supporting a CPU and a GPU, a model identifier of the sub-network model ResNet may be represented as 0x00010101006500000000000000040000. The sub-network model is displayed in the packet header format, as shown in Table 1b. In the following tables in this application, 0x represents a hexadecimal number representation method.

**Table 1b**

| Model type (16 bits) 0x0001 | Dataset type (8 bits) 0x01 | Data type (8 bits) 0x01 |
| --- | --- | --- |
| Network layer number (16 bits) 0x0065 | Backbone network type (16 bits) 0x0000 | Backbone network dataset type (8 bits) 0x00 |

(continued)

| Model type (16 bits) 0x0001 | Dataset type (8 bits) 0x01 | Data type (8 bits) 0x01 |
|---|---|---|
| Backbone network data type (8 bits) 0x00 | Backbone network layer number (16 bits) 0x0000 | Model file information (8 bits) 0x00 |
| Computing resource type (8 bits) 0x04 | Reserved (reserved,16 bits) 0x0000 | |

In another implementation 2, the model identifier is information obtained according to a mapping function, an input of the mapping function is information indicated by the model identifier, and an output of the mapping function is the model identifier. Generation of the model identifier is shown in FIG. 6. Each piece of information indicated by the model identifier is used as an input, that is, each parameter or piece of information of the sub-network model is used as the input, and is input to the mapping function. An output result is obtained through calculation according to the mapping function, and the output result is the model identifier. The mapping function is represented by y=f(a), where a represents the input information, f(a) represents the mapping function, and y represents the output according to the mapping function.

For example, the mapping function is a hash (Hash) algorithm. There are many types of the hash algorithm, and typical hash algorithms include MD4, MD5, SHA-1, SHA256, SHA384, and SHA512. A model ID with a fixed length can be output according to the hash algorithm. The hash algorithm MD5 is used as an example to generate a model ID with a fixed length of 128 bits. Assuming that a dataset type of the sub-network model ResNet is MS COCO, a data type is float32, a network layer number is 101, a backbone network type is ResNet, model file information is all information combinations, a computing resource type is supporting a CPU and a GPU, and input information may be represented as "ResNet MS COCO float32 101 ResNet MS COCO float32 101 all CPU+GPU", the model ID is equal to MD5 ("ResNet MS COCO float32 101 ResNet MS COCO float32 101 all CPU+GPU").

For another example, the hash algorithm SHA-1 is used as an example to generate a model ID with a length of 160 bits. A specific generation process is similar to that of the hash algorithm MD5. For details, refer to the foregoing description. Details are not described herein again.

The foregoing explicates that there is a correspondence between the sub-network model and the model identifier. A model management apparatus may store a model library, and the model library includes the correspondence between the sub-network model and the model identifier. The model management apparatus may be the foregoing second communication apparatus, a first communication apparatus, or a third communication apparatus. In other words, the second communication apparatus, the first communication apparatus, and the third communication apparatus each may store a model library in a manner performed by the model management apparatus to store the model library.

The correspondence between the sub-network model and the model identifier may be represented in a form of a table, or may be represented in another form. The correspondence may be in a unit of the sub-network model, for example, model identifiers respectively corresponding to the plurality of sub-network models. Alternatively, the correspondence may be in a unit of the AI model, that is, the model library stores, in a unit of the AI model, model identifiers respectively corresponding to one or more sub-network models in the AI model.

Assuming that the correspondence may be in a unit of the sub-network model, the correspondence is described by using an example. As shown in Table 2, a sub-network model 1 corresponds to a model identifier 1, a sub-network model 2 corresponds to a model identifier 2, a sub-network model 3 corresponds to a model identifier 3, a sub-network model 4 corresponds to a model identifier 4, ..., and the like.

**Table 2**

| Sub-network model 1 | Model identifier 1 |
|---|---|
| Sub-network model 2 | Model identifier 2 |
| Sub-network model 3 | Model identifier 3 |
| Sub-network model 4 | Model identifier 4 |
| ... | ... |

Alternatively, the correspondence may be in a unit of the AI model. When one AI model includes a plurality of sub-network models, the plurality of sub-network models include a backbone network model and a functional network model. The following uses an example to describe a correspondence between the plurality of sub-network models in the AI model and model identifiers. It is assumed that one AI model includes one backbone network model and four functional network models, and the correspondence between the sub-network models and model identifiers is represented in a table form, as shown in Table 3. The backbone network model corresponds to a model identifier 1, a functional network model 1 corresponds to a model identifier 2, a functional network model 2 corresponds to a model identifier 3, a functional network model 3 corresponds to a model identifier 4, and a functional network model 4 corresponds to a model identifier 5.

**Table 3**

| | |
|---|---|
| Backbone network model | Model identifier 1 |
| Functional network model 1 | Model identifier 2 |
| Functional network model 2 | Model identifier 3 |
| Functional network model 3 | Model identifier 4 |
| Functional network model 4 | Model identifier 5 |

Based on the representation method of the correspondence in a unit of the AI model, further, an index of the model identifier may indicate the model identifier. For example, based on Table 3, an index value indicates each model identifier, as shown in Table 4. An index value 1 indicates a model identifier 1, an index value 2 indicates a model identifier 2, an index value 3 indicates a model identifier 3, an index value 4 indicates a model identifier 4, and an index value 5 indicates a model identifier 5. In this way, n bits may indicate $2^n$ model identifiers, so that a size of the model identifier can be greatly reduced, and information exchange between the model requester and the model provider can be reduced.

**Table 4**

| | | |
|---|---|---|
| Backbone network model | Model identifier 1 | Index value 1 |
| Functional network model 1 | Model identifier 2 | Index value 2 |
| Functional network model 2 | Model identifier 3 | Index value 3 |
| Functional network model 3 | Model identifier 4 | Index value 4 |
| Functional network model 4 | Model identifier 5 | Index value 5 |

That the correspondence is in a unit of the AI model may alternatively be understood as that the correspondence is in a unit of an AI service, or the correspondence is in a unit of an application scenario of the AI service. When an AI service is determined, an architecture of a sub-network model corresponding to the AI service is determined, and a model identifier of the sub-network model corresponding to the AI service may be determined. Further, the model identifier of the sub-network model corresponding to the AI service may be indicated by using an index value. The model requester and the model provider need to keep a same size for the index value of the model identifier of the sub-network model. For example, the model identifier of the sub-network model corresponding to the AI service is represented by using an 8-bit index. The 8-bit index may indicate $2^8$ model identifiers. Certainly, a quantity of sub-network models of the AI service may be less than $2^8$. The model identifier of the sub-network model corresponding to the AI service may also be represented by using an index of another quantity of bits.

For example, as shown in Table 5, the AI service is a video service, the video service includes five layers of sub-network models, and an index corresponding to the sub-network model identifier is carried by using 8 bits. A correspondence between the sub-network models of the video service and the model identifiers is shown in Table 5. As shown in Table 5, 00000000 corresponds to a layer 0 sub-network model of the video service, and 00000101 corresponds to a first-two layer sub-network model of the video service.

**Table 5**

| Video service: sub-network model | Video service: sub-network model ID | Index corresponding to the ID |
|---|---|---|
| Layer 0 sub-network model | Layer 0 sub-network model ID | 00000000 |
| Layer 1 sub-network model | Layer 1 sub-network model ID | 00000001 |
| Layer 2 sub-network model | Layer 2 sub-network model ID | 00000010 |
| Layer 3 sub-network model | Layer 3 sub-network model ID | 00000011 |

(continued)

| Video service: sub-network model | Video service: sub-network model ID | Index corresponding to the ID |
|---|---|---|
| Layer 4 sub-network model | Layer 4 sub-network model ID | 00000100 |
| First two-layer sub-network model | First two-layer sub-network model ID | 00000101 |
| First three-layer sub-network model | First three-layer sub-network model ID | 00000110 |
| First four-layer sub-network model | First four-layer sub-network model ID | 00000111 |
| First five-layer sub-network model | First five-layer sub-network model ID | 00001000 |
| ... | ... | ... |

In a possible design, when the correspondence is in a unit of the AI model or the AI service, the model management apparatus may store a correspondence between the AI model and the index value, where the index value indicates the AI model; or the model management apparatus may store a correspondence between the AI service and the index value, where the index value indicates the AI service. For example, the model library stored in the model management apparatus includes m AI models, the m AI models respectively correspond to m index values, a first AI model corresponds to a first index value, a second AI model corresponds to a second index value, a third AI model corresponds to a third index value, ..., and the like. In this way, one index value may represent the entire AI model. For example, one index value may represent the AI model shown in Table 4. n bits may indicate $2^n$ AI models, so that information exchange between the model requester and the model provider can be greatly reduced.

The foregoing describes how the model management apparatus manages the correspondence between the sub-network model and the model ID, and may further manage the correspondence between the sub-network model, the model ID, and the index. It may be understood that the model management apparatus may further store or manage a model file corresponding to the sub-network model. The model management apparatus may perform management such as updating, deleting, or modifying on the stored model library.

Different sub-network models may have a similarity. The similarity means that after the plurality of sub-network models perform inference or verification on same data, a difference between accuracy rates is less than a specified threshold or the accuracy rates are all within a specified range. The similarity may alternatively mean that after the plurality of sub-network models perform inference or verification on same data, a difference between error rates is less than a specified threshold or the error rates are all within a specified range. The similarity may alternatively mean that after the plurality of sub-network models perform inference or verification on same data, a difference between precision errors is less than a specified threshold or the precision errors are all within a specified range.

The accuracy rate may be represented by using an accuracy rate of first P (TOP-P) results, and the TOP-P is a probability that one of the first P results is correct through calculation of the sub-network model. For example, P=1, and an accuracy rate of the TOP-1 is a probability that the first result is correct through calculation of the sub-network model. For another example, P=5, and an accuracy rate of the TOP-5 is a probability that one of the first five results is correct through calculation of the sub-network model.

Model identifiers corresponding to the sub-network models that have the similarity may form a model identifier group, or form a model identifier list (list). Any two sub-network models in the model identifier group have a similarity. A plurality of model identifiers in the model identifier group may be in a packet header format, may be in a mapping function format, or may be in another possible format.

The model management apparatus may manage or store the model identifier group or the model identifier list. The following uses an example to describe the model identifier group. A concept and an implementation of the model identifier list are the same as those of the model identifier group.

The following uses an example to describe the model identifier group.

The plurality of sub-network models have a same dataset type and a same data type, and have different model types. Through inference or verification, the plurality of sub-network models may have a similarity, and model identifiers corresponding to the sub-network models that have the similarity may form the model identifier group.

It is assumed that the plurality of sub-network models are VGG-16, GoogleNet, MobileNetV1, MobileNetV2, and MobileNetV3-Large. It is assuming that datasets of the several sub-network models are ImageNet and data types are float32. The sub-network model is the backbone network model. All model file information (a network structure, a model parameter, code, a configuration, and the like) of the sub-network model is required, and CPU+GPU computing resources are supported. A generation manner of the model identifier is the foregoing implementation 1, that is, the model identifier is included in the packet header format. In this case, model identifiers corresponding to the several sub-network models and corresponding TOP-1 accuracy rates are shown in Table 6.

**Table 6**

| Network type (ImageNet dataset) | Top-1 accuracy rate | Sub-network model ID (packet generation rule) |
|---|---|---|
| VGG-16 | 71.5% | 0x00000001001000000000000000040000 |
| GoogleNet | 69.8% | 0x00060001000000000000000000040000 |
| MobileNetV1 | 70.6% | 0x00020001000000000000000000040000 |
| MobileNetV2 | 72.0% | 0x00030001000000000000000000040000 |
| MobileNetV3-Large | 75.2% | 0x00040001000000000000000000040000 |

It is assumed that the similarity means that after the plurality of sub-network models perform inference or verification on same data, the Top-1 accuracy rates are all within a specified range (T1 to T2), where T1=70%, and T1=75%. Therefore, it is determined that sub-network models, in the foregoing several sub-network models, whose Top-1 accuracy rates are between 70% and 75% have the similarity. If Top-1 accuracy rates of three sub-network models that are VGG-16, MobileNetV1, and MobileNetV2 are between 70% and 75%, the model identification group is {0x00000001001000000000000000040000, 0x00020001000000000000000000040000, 0x00030001000000000000000000040000}.

It is assumed that the similarity means that after the plurality of sub-network models perform inference or verification on same data, the Top-1 accuracy rates are all within a specified range (T1 to T2), where T1=68%, and T1=76%. Therefore, it is determined that sub-network models, in the foregoing several sub-network models, whose Top-1 accuracy rates are between 68% and 76% have the similarity. If Top-1 accuracy rates of sub-network models that are VGG-16, GoogleNet, MobileNetV1, MobileNetV2, and MobileNetV3-Large are between 68% and 76%, the model identification group is {0x00000001001000000000000000040000, 0x00060001000000000000000000040000, 0x00020001000000000000000000040000, 0x00030001000000000000000000040000, 0x00040001000000000000000000040000}.

It is assumed that the similarity means that after the plurality of sub-network models perform inference or verification on same data, a difference diff_T of the Top-1 accuracy rates is less than a set threshold, for example, diff_T=2%, so that sub-network models, in the foregoing several sub-network models, whose differences of Top-1 accuracy rates are less than 2% are GoogleNet, VGG-16, and MobileNetV1. Therefore, the model identifier group is {0x00060001000000000000000000040000, 0x00000001001000000000000000040000, 0x00020001000000000000000000040000}.

The plurality of sub-network models have different dataset types, and have a same model type and a same data type. Through inference or verification, the plurality of sub-network models may have a similarity, and model identifiers corresponding to the sub-network models that have the similarity may form the model identifier group.

It is assumed that model types of the plurality of sub-network models are ResNet101, datasets are ImageNet, JFT-300M, and ML-images, and data types are float32. The sub-network model is the backbone network model. All model file information (a network structure, a model parameter, code, a configuration, and the like) of the sub-network model is required, and CPU+GPU computing resources are supported. A generation manner of the model identifier is the foregoing implementation 1, that is, the model identifier is included in the packet header format. In this case, model identifiers corresponding to the several sub-network models and corresponding accuracy rates are shown in Table 7.

**Table 7**

| Model: network structure | Pre-training dataset | ImageNet verification set classification precision | | Sub-network model ID (packet generation rule) |
|---|---|---|---|---|
| | | Top-1 | Top-5 | / |
| ResNet-101 | ImageNet (1.2M image, 1K) | 74.6% | 92.9% | 0x00010001 00650000 00000000 00040000 |
| ResNet-101 | JFT-300M (300M image, 18K) | 79.2% | 94.7% | 0x00010301 00650000 00000000 00040000 |
| ResNet-101 | ML-images (18M image, 11K) | 80.73% | 95.5% | 0x00010201 00650000 00000000 00040000 |

It is assumed that the similarity means that after the plurality of sub-network models perform inference or verification on same data, the Top-5 accuracy rates are all within a specified range (T1 to T2), where T1=92%, and T1=96%. Therefore, it is determined that sub-network models, in the foregoing several sub-network models, whose Top-5 accuracy rates are between 92% and 96% have the similarity. The several sub-network models perform verification on dataset types that are ImageNet, JFT-300M, and ML-images that are of ResNet101, to obtain that Top-5 accuracy rates are between 92% and 96%. Therefore, it may be considered that the several sub-network models are similar. Therefore, the model identifier group is {0x00010001006500000000000000400000, 0x00010301006500000000000000400000, 0x0001020100650000000000 000400000}.

It is assumed that the similarity means that after the plurality of sub-network models perform inference or verification on same data, the Top-5 accuracy rates are all within a specified range (T1 to T2), where T1=94%, and T1=96%. Therefore, it is determined that sub-network models, in the foregoing several sub-network models, whose Top-5 accuracy rates are between 92% and 96% have the similarity. The several sub-network models perform verification on dataset types that are JFT-300M and ML-images that are of ResNet101, to obtain that Top-5 accuracy rates are between 94% and 96%. Therefore, it may be considered that the several sub-network models have the similarity. Therefore, the model identifier group is {0x00010301006500000000000000400000, 0x0001020100650000000000 000400000}.

It is assumed that the similarity means that after the plurality of sub-network models perform inference or verification on same data, a difference diff_T of the Top-5 accuracy rates is less than a specified threshold, for example, diff_T=2%. Therefore, sub-network models, in the foregoing sub-network models, whose differences of Top-5 accuracy rates are less than 2% are JFT-300M and ML-images. Therefore, the model identifier group is {0x00010301006500000000000000400000, 0x0001020100650000000000 000400000}.

In this embodiment of this application, the model identifier group or the model identifier list may be further generated in the following manner. When one of pieces of information about the plurality of sub-network models is different and other pieces of information are the same, model identifiers of the plurality of sub-network models may form the model identifier group. For example, if information such as dataset types, data types, backbone network types, backbone network dataset types, backbone network data types, backbone network layer numbers, or computing resource types of the plurality of sub-network models is the same, and only network layer numbers of the sub-network models are different, model identifiers of the plurality of sub-network models may form the model identifier group. It may be understood that when two or more of pieces of information about the plurality of sub-network models are different and other pieces of information are the same, model identifiers of the plurality of sub-network models may also form the model identifier group. This is not limited in this application.

The sub-network model ResNet in the Mask-RCNN is used as an example. Assuming that a dataset type of the sub-network model ResNet is MS COCO, a data type is float32, a network layer number is 101, a backbone network type is ResNet, model file information is all information combinations, and a computing resource type is supporting a CPU and a GPU, the network layer number may be 18, 34, 50, 101, or 152. For the several possible network layer numbers, on the basis that other information is clear, the model identifier group {0x00010101001200000000000000040000, 0x00010101002200000000000000040000, 0x00010101003200000000000000040000, 0x00010101006500000000000000040000, 0x00010101009800000000000000040000} may be generated. Certainly, the model identifier group may also be a representation form of the foregoing implementation 2, that is, the model identifier is information obtained according to the mapping function.

The foregoing describes the model identifier and related embodiments. The following further describes the embodiment in FIG. 4 in detail with reference to specific application scenarios.

Application scenario 1:

In S401, the first communication apparatus sends request information to the second communication apparatus, where the request information is used to request the AI service. The request information may include service requirement information of the AI service, or the request information is the service requirement information of the AI service. The service requirement information of the AI service is used by the second communication apparatus to determine information about an AI model of the AI service.

The service requirement information of the AI service may include a service type of the AI service. For example, the service type is image recognition. For another example, the service type is speech recognition.

Optionally, the service requirement information of the AI service may further include one or a combination of the following information: a dataset type, a data type, or a computing resource.

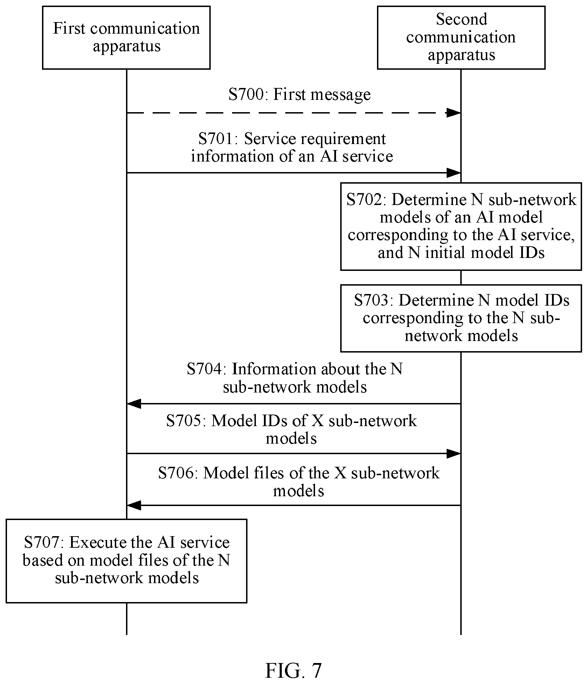

In the application scenario 1, as shown in FIG. 7, a specific procedure of an application method of an AI model identifier is as follows.

S700: The first communication apparatus sends a first message to the second communication apparatus, and correspondingly, the second communication apparatus receives the first message from the first communication apparatus.

The first message includes a sub-network model ID of the first communication apparatus. Alternatively, the first message includes an index value corresponding to the sub-network model ID of the first communication apparatus.

The second communication apparatus may be the foregoing model management apparatus, and locally store or manage the model library. The first communication apparatus may report the first message to the second communication apparatus when there is a service requirement. The first message may be considered as capability information. The first message may be, for example, RRC signaling. Alternatively, the first communication apparatus may report the first message after accessing a network, or may periodically report the first message.

This step is optional.

S701: The first communication apparatus sends service requirement information of an AI service to the second communication apparatus, where the service requirement information of the AI service is used to request the AI service. Correspondingly, the second communication apparatus receives the service requirement information of the AI service from the first communication apparatus.

This step may correspond to S401.

S702: The second communication apparatus determines N sub-network models of an AI model corresponding to the AI service, and determines N initial model IDs corresponding to the N sub-network models.

The second communication apparatus has a model parsing capability, or the second communication apparatus is a model parsing apparatus, or the second communication apparatus includes the model parsing apparatus. After receiving the service requirement information of the AI service, the second communication apparatus parses the AI service based on the service requirement information of the AI service, to determine the N sub-network models of the AI model corresponding to the AI service, that is, divides the AI service, and may parse the AI service into N steps. Each step corresponds to an independent sub-network model.

If the service requirement information of the AI service is clear, for example, information such as a model type, a dataset type, a data type, a network layer number, a backbone network type, a backbone network dataset type, a backbone network data type, a backbone network layer number, or a computing resource type is clear, the second communication apparatus may first divide the AI service to obtain the N sub-network models based on the service requirement information of the AI service. Each sub-network model may clearly correspond to a model identifier of a sub-network model.

If the service requirement information of the AI service is unclear, the second communication apparatus may perform in-depth perception on the AI service, first divide the AI service to obtain the N sub-network models, and then determine a model identifier of a sub-network model or a model identifier group for each sub-network model.

The following uses several examples to describe how the second communication apparatus determines the model identifier or the model identifier group for each sub-network model when the service requirement information of the AI service is unclear.

For example, the second communication apparatus may perceive or determine a communication scenario of the AI service, and determine a model identifier of a sub-network model or a model identifier group based on the communication scenario.

For example, it is assumed that the communication scenario of the AI service is a scenario with a high moving rate, for example, a high-speed railway scenario. In the scenario with a high moving rate, a channel changes rapidly, and bandwidth is limited, so that the second communication apparatus may determine that a data type is a sub-network model or a model identifier group whose data type is low-precision and whose network structure in a model type is simple.

For another example, it is assumed that the communication scenario of the AI service is an application scenario, for example, industrial high-precision detection and self driving. In this scenario, a precision requirement is high. If the model requester has a strong computing capability, the second communication apparatus may determine some sub-network models or model identifier groups whose data types are high-precision and whose network structures in model types are complex.

For another example, it is assumed that the communication scenario of the AI service is an application scenario, for example, satellite communication. In this scenario, transmission bandwidth is large. If the model requester has a strong computing capability, the second communication apparatus may determine some sub-network models or model identifier groups whose data types are high-precision and whose network structures in model types are complex.

S703: The second communication apparatus determines, based on the N initial model IDs corresponding to the N sub-network models, N model IDs corresponding to the N sub-network models.

The second communication apparatus queries the model library. If model files corresponding to the N initial model IDs exist in the model library, the N initial model IDs are the finally determined N model IDs corresponding to the N sub-network models. If a model file corresponding to a first initial model ID in the N initial model IDs does not exist in the model library, whether the first initial model ID has a corresponding model ID group is searched. If the first initial model ID has the corresponding model ID group, a model ID is selected from the corresponding model ID group to replace the first initial model ID, to generate the final N model IDs corresponding to the N sub-network models. When the model ID is selected from the model ID group, a model ID that already exists in the first communication apparatus may be preferably selected based on the first message in S700. If the first initial model ID does not have the corresponding model ID group, a proper model ID may be determined based on a use frequency of the model, randomness, or the like, to replace the first initial model ID to generate the final N model IDs. It may be understood that model files corresponding to a plurality of initial model IDs in the N initial model IDs may not exist in the model library, and replaced model IDs may be determined for the plurality of initial model IDs in the foregoing manner of the first initial model ID, to generate the final N model IDs.

If a second initial model ID in the N initial model IDs determined in S702 has a corresponding model ID group, the second communication apparatus selects a model ID from the model ID group as a model ID of the second initial model ID. When the model ID is selected from the model ID group, a model ID that already exists in the first communication apparatus may be preferably selected based on the first message in S700, or a proper model ID may be determined based on a use frequency of the model or randomness. It may be understood that, if a plurality of initial model IDs in the N initial model IDs determined in S702 have corresponding model ID groups, the final model IDs may be determined for the plurality of initial model IDs in the foregoing manner of the second initial model ID.

S704: The second communication apparatus sends information about the N sub-network models to the first communication apparatus, where the information about the N sub-network models includes model IDs of the N sub-network models, or indexes corresponding to the model IDs of the N sub-network models, or indexes corresponding to the AI model of the AI service. Correspondingly, the first communication apparatus receives the information about the N sub-network models.

Optionally, the second communication apparatus may further determine, based on the first message in S700, that the first communication apparatus already has model files of some of the N sub-network models. The first communication apparatus does not have model files of X sub-network models in the N sub-network models, or the model files of the X sub-network models do not exist or are damaged in the first communication apparatus, for example, not locally exist, damaged, missing, or nonexistent. The first communication apparatus already has model files of (N-X) sub-network models in the N sub-network models. In this case, the second communication apparatus may further send model IDs of the (N-X) sub-network models to the first communication apparatus. Alternatively, the second communication apparatus does not send the model IDs of the (N-X) sub-network models. After receiving the information about the N sub-network models, the first communication apparatus may determine that the first communication apparatus already has the (N-X) sub-network models in the N sub-network models.

S705: The first communication apparatus sends model IDs of the X sub-network models to the second communication apparatus, and correspondingly, the second communication apparatus receives the model IDs of the X sub-network models.

The model IDs of the X sub-network model are used to request to obtain the model files of the X sub-network model. Optionally, the model IDs of the X sub-network models may be carried in a message, and the message is used to request the model files of the X sub-network models.

Certainly, the first communication apparatus sends indexes corresponding to the model IDs of the X sub-network models to the second communication apparatus. Correspondingly, the second communication apparatus receives the indexes corresponding to the model IDs of the X sub-network models. In this way, information overheads can be reduced.

S706: The second communication apparatus sends the model files of the X sub-network models to the first communication apparatus based on the model IDs of the X sub-network models. Correspondingly, the first communication apparatus receives the model files of the X sub-network models from the second communication apparatus.

The second communication apparatus queries the model library based on the model IDs of the X sub-network models, determines model files corresponding to the model IDs of the X sub-network models, and sends the model files of the X sub-network models.

It may be understood that the second communication apparatus further needs to send the model IDs of the X sub-network models, and there is a correspondence between the model ID and the model file, to indicate which model ID corresponding to a model file. The model ID may be carried in the model file or sent separately.

This step may correspond to sending the information about the AI model in S403.

If N=X, that is, the first communication apparatus already has the N sub-network models, S705 and S706 are omitted.

S707: The first communication apparatus executes the AI service based on model files of the N sub-network models.

This step may correspond to S404.

The first communication apparatus forms the AI model based on the model files of the X sub-network models that are obtained in S706 and the (N-X) sub-network models that already exist, and executes the AI service based on the AI model. Executing the AI service may be AI training, AI inference, or another AI service.

In the application scenario 1, the first communication apparatus independently completes the AI service. In an application scenario 2, the first communication apparatus and the second communication apparatus may jointly complete the AI service. When the AI service is jointly completed, the AI model corresponding to the AI service includes two parts of sub-network models. The first communication apparatus locally completes AI service processing of one part of sub-network models, and the second communication apparatus completes AI service processing of the other part of sub-network models. It may also be considered that the AI service includes a first part of the AI service and a second part of the AI service. The first communication apparatus processes the first part of the AI service based on a first part of sub-network models of the AI model, and the second communication apparatus processes the second part of the AI service based on a second part of sub-network models of the AI model. In this way, the first communication apparatus and the second communication apparatus may jointly complete AI service processing.

The following describes an embodiment of the application scenario 2.

Application scenario 2:

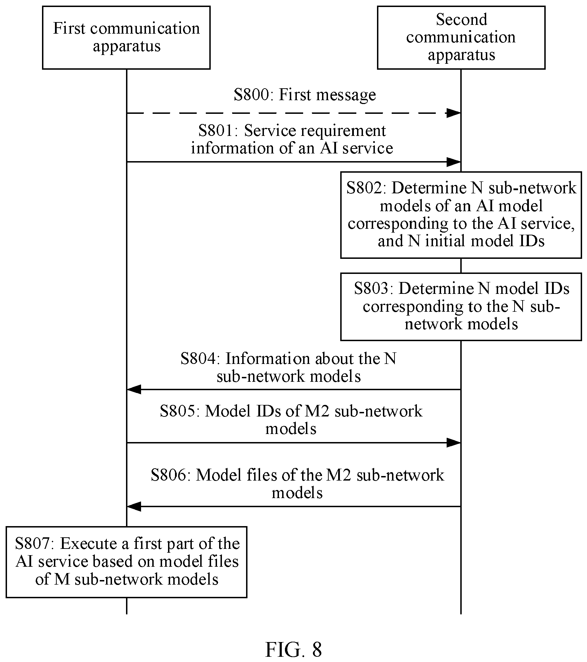

In the application scenario 2, as shown in FIG. 8, a specific procedure of an application method of an AI model identifier is as follows.

S800: The first communication apparatus sends a first message to the second communication apparatus, and correspondingly, the second communication apparatus receives the first message from the first communication apparatus.

The first message includes a sub-network model ID of the first communication apparatus. Alternatively, the first message includes an index value corresponding to the sub-network model ID of the first communication apparatus.

This step is the same as S700. For details, refer to the description of S700. Details are not described herein again.

S801: The first communication apparatus sends service requirement information of an AI service to the second communication apparatus, where the service requirement information of the AI service is used to request the AI service. Correspondingly, the second communication apparatus receives the service requirement information of the AI service from the first communication apparatus.

This step may correspond to S401. This step is the same as S701. For details, refer to the description of S701. Details are not described herein again.

S802: The second communication apparatus determines N sub-network models of an AI model corresponding to the AI service, and determines N initial model IDs corresponding to the N sub-network models.

This step is the same as S702. For details, refer to the description of S702. Details are not described herein again.

S803: The second communication apparatus determines, based on the N initial model IDs corresponding to the N sub-network models, N model IDs corresponding to the N sub-network models.

This step is the same as S703. For details, refer to the description of S703. Details are not described herein again.

S804: The second communication apparatus sends information about the N sub-network models to the first communication apparatus, where the information about the N sub-network models includes model IDs of the N sub-network models, or indexes corresponding to the model IDs of the N sub-network models, or indexes corresponding to the AI model of the AI service. Correspondingly, the first communication apparatus receives the information about the N sub-network models.

This step is the same as S704. For details, refer to the description of S704. Details are not described herein again.

S805: The first communication apparatus sends model IDs of M2 sub-network models to the second communication apparatus, and correspondingly, the second communication apparatus receives the model IDs of the M2 sub-network models.

The model IDs of the M2 sub-network model are used to request to obtain model files of the M2 sub-network model. Optionally, the model IDs of the M2 sub-network models may be carried in a message, and the message is used to request the model files of the M2 sub-network models.

Certainly, the first communication apparatus may send indexes corresponding to the model IDs of the M2 sub-network models to the second communication apparatus. Correspondingly, the second communication apparatus receives the indexes corresponding to the model IDs of the M2 sub-network models. In this way, information overheads can be reduced.

Specifically, the first communication apparatus determines that a first part of the AI service needs to be processed based on M sub-network models in the N sub-network models. If the first communication apparatus already has the M sub-network models, that is, (N-X) sub-network models include the M sub-network models, the first communication apparatus processes the first part of the AI service based on the M sub-network models that already exist. If the first communication apparatus already has M1 sub-network models in the M sub-network models, the first communication apparatus further needs to request, from the second communication apparatus, the M2 sub-network models other than the M1 sub-network models in the M sub-network models.

S806: The second communication apparatus sends the model files of the M2 sub-network models to the first communication apparatus based on the model IDs of the M2 sub-network models. Correspondingly, the first communication apparatus receives the model files of the M2 sub-network models from the second communication apparatus.

The second communication apparatus queries the model library based on the model IDs of the M2 sub-network models, determines model files corresponding to the model IDs of the M2 sub-network models, and sends the model files of the M2 sub-network models.

It may be understood that the second communication apparatus further needs to send the model IDs of the M2 sub-network models, and there is a correspondence between the model ID and the model file, to indicate which model ID corresponding to a model file. The model ID may be carried in the model file or sent separately.

This step may also correspond to sending the information about the AI model in S403. The information about the AI model herein includes the model files of the M2 sub-network models in the N sub-network models.

S807: The first communication apparatus processes the first part of the AI service based on the M sub-network models.

The M sub-network models include the M1 sub-network models that already exist and the M2 sub-network models obtained by requesting the second communication apparatus by using S806 and S807. The first communication apparatus forms the first part of sub-network models of the AI model based on the M1 sub-network models and the M2 sub-network models, and executes the first part of the AI service based on the first part of sub-network models. The executing the first part of the AI service may be AI training, AI inference, or another AI service.

This step may correspond to S404.

Optionally, the second communication apparatus processes a second part of the AI service based on a sub-network model other than the M sub-network models in the N sub-network models. The second communication apparatus may further send a processing result of the second part of the AI service to the first communication apparatus, and the first communication apparatus obtains a processing result of the entire AI service based on the received processing result of the second part of the AI service and a processing result that is of the first part of the AI service and that is obtained by the first communication apparatus.

In the foregoing application scenario 1 and application scenario 2, the second communication apparatus has a model parsing capability, or the second communication apparatus is a model parsing apparatus, or the second communication apparatus includes the model parsing apparatus. The second communication apparatus obtains the N sub-network models through division based on the AI service. In some other application scenarios, the first communication apparatus may also have a model parsing capability. In this case, when the first communication apparatus needs to execute the AI service, the first communication apparatus may obtain the N sub-network models through division based on the AI service. The following provides descriptions by using an application scenario 3 and an application scenario 4.

Application scenario 3:

In S401, the first communication apparatus sends request information to the second communication apparatus, where the request information is used to request the AI service. The request information may include model identifiers of X sub-network models in N sub-network models.

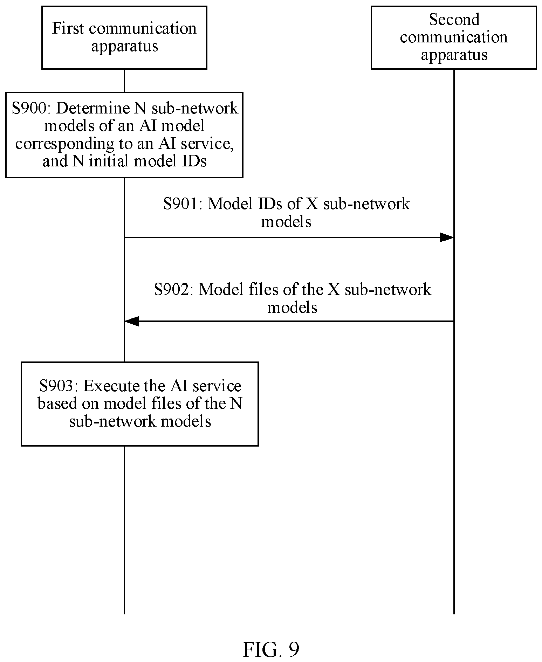

In the application scenario 3, as shown in FIG. 9, a specific procedure of an application method of an AI model identifier is as follows.

S900: The first communication apparatus determines N sub-network models of an AI model corresponding to an AI service, and determines N model IDs corresponding to the N sub-network models.

The first communication apparatus has a model parsing capability, or the first communication apparatus is a model parsing apparatus, or the first communication apparatus includes the model parsing apparatus.

The first communication apparatus parses the AI service based on service requirement information of the AI service, to determine the N sub-network models of the AI model corresponding to the AI service, that is, divides the AI service, and may parse the AI service into N steps. Each step corresponds to an independent sub-network model.

The first communication apparatus can determine a requirement of an AI service that needs to be executed. If the service requirement of the AI service is clear, for example, requirements such as a model type, a dataset type, a data type, a network layer number, a backbone network type, a backbone network dataset type, a backbone network data type, a backbone network layer number, or a computing resource type are clear, the first communication apparatus may first divide, based on these service requirements of the AI service, the AI model corresponding to the AI service into the N sub-network models. Each sub-network model may clearly correspond to a model identifier of a sub-network model.

If the service requirement of the AI service is unclear, the first communication apparatus may perform in-depth perception on the AI service, first divide the AI model corresponding to the AI service into the N sub-network models, and determine a model identifier of a sub-network model or a model identifier group for each sub-network model.

The following uses several examples to describe how the first communication apparatus determines the model identifier or the model identifier group for each sub-network model when the service requirement information of the AI service is unclear.

For example, the first communication apparatus may perceive or determine a communication scenario of the AI service, and determine a model identifier of a sub-network model or a model identifier group based on the communication scenario.

For example, it is assumed that the communication scenario of the AI service is a scenario with a high moving rate, for example, a high-speed railway scenario. In the scenario with a high moving rate, a channel changes rapidly, and bandwidth is limited, so that the first communication apparatus may determine that a data type is a sub-network model or a model identifier group whose data type is low-precision and whose network structure in a model type is simple.

For another example, it is assumed that the communication scenario of the AI service is an application scenario, for example, industrial high-precision detection and self driving. In this scenario, a precision requirement is high. If the model requester has a strong computing capability, the first communication apparatus may determine some sub-network models or model identifier groups whose data types are high-precision and whose network structures in model types are complex.

For another example, it is assumed that the communication scenario of the AI service is an application scenario, for example, satellite communication. In this scenario, transmission bandwidth is large. If the model requester has a strong computing capability, the first communication apparatus may determine some sub-network models or model identifier groups whose data types are high-precision and whose network structures in model types are complex.

It should be noted that, if the model identifier group is determined for a sub-network model, the first communication apparatus further determines a model identifier of the sub-network model, and may select a model identifier that already exists locally in the first communication apparatus from the model identifier group, or may determine a proper model identifier based on a use frequency of the model, randomness, or the like.

S901: The first communication apparatus sends, to the second communication apparatus, X model IDs or index values corresponding to the X model IDs. Correspondingly, the second communication apparatus receives the X model IDs or the index values corresponding to the X model IDs.

The X model IDs or the index values corresponding to the X model IDs are used to request model files of the X model IDs.

Optionally, the X model IDs or the index values corresponding to the X model IDs may be carried in a message, and the first communication apparatus sends the message to the second communication apparatus. This message is used to request the model files of the X model IDs.

The first communication apparatus queries the model library. If model files corresponding to some of the N model IDs already exist in the model library, and the model files corresponding to the X model IDs of the N model IDs do not exist, that is, model files of (N-X) sub-network models in the N sub-network models already exist, the first communication apparatus sends the X model IDs or the index values corresponding to the X model IDs to the second communication apparatus, to request the model files of the X model IDs.

S902: The second communication apparatus sends the model files of the X sub-network models to the first communication apparatus based on the model IDs of the X sub-network models. Correspondingly, the first communication apparatus receives the model files of the X sub-network models from the second communication apparatus.

The second communication apparatus queries the model library based on the model IDs of the X sub-network models, determines model files corresponding to the model IDs of the X sub-network models, and sends the model files of the X sub-network models. If a model file corresponding to one or more model IDs in the model IDs of the X sub-network models does not exist in the model library, the second communication apparatus may select one model ID from a model ID group corresponding to the missing model ID for replacement, or may select a model ID that already exists in the first communication apparatus. If the model ID group does not have the model ID that already exists in the first communication apparatus, a model ID may be selected for replacement based on a use frequency or randomness.

It may be understood that the second communication apparatus further needs to send the model IDs of the X sub-network models, and there is a correspondence between the model ID and the model file, to indicate which model ID corresponding to a model file. The model ID may be carried in the model file or sent separately.

This step may correspond to sending the information about the AI model in S403.

S903: The first communication apparatus executes the AI service based on model files of the N sub-network models.

This step may correspond to S404.

The first communication apparatus forms the AI model based on the model files of the X sub-network models that are obtained in S902 and the (N-X) sub-network models that already exist, and executes the AI service based on the AI model. Executing the AI service may be AI training, AI inference, or another AI service.

It may be understood that, if the first communication apparatus determines that the N sub-network models already exist locally after performing S900, S901 and S902 are omitted and S903 is performed.

In the application scenario 3, the first communication apparatus independently completes the AI service. In an application scenario 4, the first communication apparatus and the second communication apparatus may jointly complete the AI service. When the AI service is jointly completed, the AI model corresponding to the AI service includes two parts of sub-network models. The first communication apparatus locally completes AI service processing of one part of sub-network models, and the second communication apparatus completes AI service processing of the other part of sub-network models. It may also be considered that the AI service includes a first part of the AI service and a second part of the AI service. The first communication apparatus processes the first part of the AI service based on a first part of sub-network models of the AI model, and the second communication apparatus processes the second part of the AI service based on a second part of sub-network models of the AI model. In this way, the first communication apparatus and the second communication apparatus may jointly complete AI service processing.

The following describes an embodiment of the application scenario 4.

Application scenario 4:

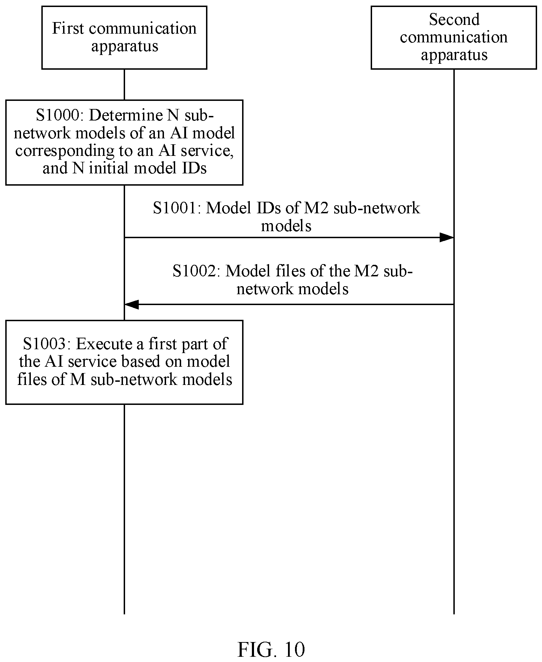

In the application scenario 4, as shown in FIG. 10, a specific procedure of an application method of an AI model identifier is as follows.

S1000: The first communication apparatus determines N sub-network models of an AI model corresponding to an AI service, and determines N model IDs corresponding to the N sub-network models.

This step is the same as S900. For details, refer to the description of S900. Details are not described herein again.

Steps S1001 to S1003 are the same as steps S805 to S807. For details, refer to the description of the embodiment in FIG. 8.

S1001: The first communication apparatus sends model IDs of M2 sub-network models to the second communication apparatus, and correspondingly, the second communication apparatus receives the model IDs of the M2 sub-network models.

This step is the same as S805. For details, refer to the description of S805. Details are not described herein again.

S1002: The second communication apparatus sends model files of the M2 sub-network models to the first communication apparatus based on the model IDs of the M2 sub-network models. Correspondingly, the first communication apparatus receives the model files of the M2 sub-network models from the second communication apparatus.

This step is the same as S806. For details, refer to the description of S806. Details are not described herein again.

S1003: The first communication apparatus processes the first part of the AI service based on the M sub-network models.

This step is the same as S807. For details, refer to the description of S807. Details are not described herein again.

Optionally, the second communication apparatus processes a second part of the AI service based on a sub-network model other than the M sub-network models in the N sub-network models. The second communication apparatus may further send a processing result of the second part of the AI service to the first communication apparatus, and the first communication apparatus obtains a processing result of the entire AI service based on the received processing result of the second part of the AI service and a processing result that is of the first part of the AI service and that is obtained by the first communication apparatus.

In the application scenario 1 and the application scenario 2, the second communication apparatus has a model parsing capability, and the second communication apparatus divides the AI service to obtain the N sub-network models. In the application scenario 3 and the application scenario 4, the first communication apparatus has a model parsing capability, and the first communication apparatus divides the AI service to obtain the N sub-network models. In addition, in the foregoing several application scenarios, the apparatuses that have the model parsing capability each have a model management capability, that is, have the model library. In another application scenario, the communication apparatus may have a model parsing capability, but does not have a model management capability, that is, does not have the model library. This case is described below by using an application scenario 5 and an application scenario 6. The first communication apparatus does not have the model parsing capability, the second communication apparatus has the model parsing capability but does not have the model management capability, and the third communication apparatus has the model management capability.

Application scenario 5:

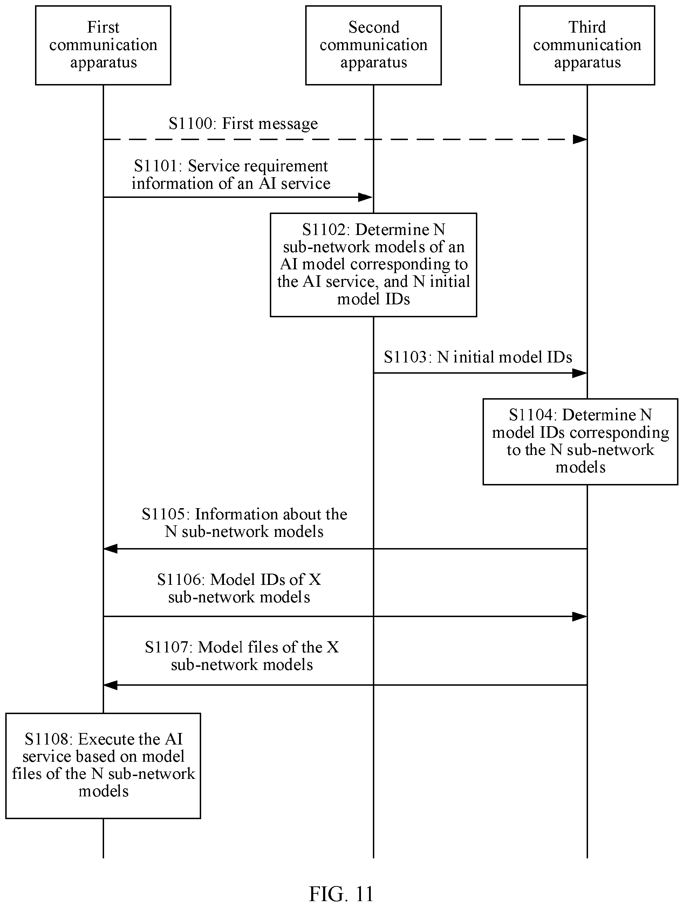

In the application scenario 5, as shown in FIG. 11, a specific procedure of an application method of an AI model identifier is as follows.

S1100: The first communication apparatus sends a first message to the third communication apparatus, and correspondingly, the third communication apparatus receives the first message from the first communication apparatus.

The first message includes a sub-network model ID of the first communication apparatus. Alternatively, the first message includes an index value corresponding to the sub-network model ID of the first communication apparatus.

The first communication apparatus may be the foregoing model management apparatus, and locally store or manage the model library. The first communication apparatus may report the first message to the second communication apparatus when there is a service requirement. The first message may be considered as capability information. The first message may be, for example, RRC signaling. Alternatively, the first communication apparatus may report the first message after accessing a network, or may periodically report the first message.

This step is optional.

S1101: The first communication apparatus sends service requirement information of an AI service to the second communication apparatus, where the service requirement information of the AI service is used to request the AI service. Correspondingly, the second communication apparatus receives the service requirement information of the AI service from the first communication apparatus.

S1102: The second communication apparatus determines N sub-network models of an AI model corresponding to the AI service, and determines N initial model IDs corresponding to the N sub-network models.

S1102 is the same as S702. For details, refer to descriptions of related steps in the embodiment in FIG. 7. Details are not described herein again.

S1103: The second communication apparatus sends the N initial model IDs corresponding to the N sub-network models to the third communication apparatus, and correspondingly, the third communication apparatus receives the N initial model IDs.

Certainly, the second communication apparatus sends indexes corresponding to the N initial model IDs to the third communication apparatus. Correspondingly, the third communication apparatus receives the indexes corresponding to the N initial model IDs. In this way, information overheads can be reduced.

The N initial model IDs or the indexes corresponding to the N initial model IDs may be carried in a message.

S1104: The third communication apparatus determines, based on the N initial model IDs corresponding to the N sub-network models, N model IDs corresponding to the N sub-network models.

The third communication apparatus queries the model library. If model files corresponding to the N initial model IDs exist in the model library, the N initial model IDs are the finally determined N model IDs corresponding to the N sub-network models. If a model file corresponding to a first initial model ID in the N initial model IDs does not exist in the model library, whether the first initial model ID has a corresponding model ID group is searched. If the first initial model ID has the corresponding model ID group, a model ID is selected from the corresponding model ID group to replace the first initial model ID, to generate the final N model IDs corresponding to the N sub-network models. When the model ID is selected from the model ID group, a model ID that already exists in the first communication apparatus may be preferably selected based on the first message in S1100. If the first initial model ID does not have the corresponding model ID group, a proper model ID may be determined based on a use frequency of the model, randomness, or the like, to replace the first initial model ID to generate the final N model IDs. It may be understood that model files corresponding to a plurality of initial model IDs in the N initial model IDs may not exist in the model library, and replaced model IDs may be determined for the plurality of initial model IDs in the foregoing manner of the first initial model ID, to generate the final N model IDs.

If a second initial model ID in the N initial model IDs received from the second communication apparatus has a corresponding model ID group, the third communication apparatus selects a model ID from the model ID group as a model ID of the second initial model ID. When the model ID is selected from the model ID group, a model ID that already exists in the first communication apparatus may be preferably selected based on the first message in S1100, or a proper model ID may be determined based on a use frequency of the model or randomness. It may be understood that, if a plurality of initial model IDs in the N initial model IDs determined in S1102 have corresponding model ID groups, the final model IDs may be determined for the plurality of initial model IDs in the foregoing manner of the second initial model ID.

S1105: The third communication apparatus sends information about the N sub-network models to the first communication apparatus, where the information about the N sub-network models includes model IDs of the N sub-network models, or indexes corresponding to the model IDs of the N sub-network models, or indexes corresponding to the AI model of the AI service. Correspondingly, the first communication apparatus receives the information about the N sub-network models.

Optionally, the third communication apparatus may further determine, based on the first message in S 1100, that the first communication apparatus already has model files of some of the N sub-network models. The first communication apparatus does not have model files of X sub-network models in the N sub-network models, and the first communication apparatus already has model files of (N-X) sub-network models in the N sub-network models. In this case, the third communication apparatus may further send model IDs of the (N-X) sub-network models to the first communication apparatus. Alternatively, the third communication apparatus does not send model IDs of (N-X) sub-network models. After receiving the information about the N sub-network models, the first communication apparatus may determine that the first communication apparatus already has (N-X) sub-network models in the N sub-network models.

S1106: The first communication apparatus sends model IDs of the X sub-network models to the third communication apparatus, and correspondingly, the third communication apparatus receives the model IDs of the X sub-network models.

The model IDs of the X sub-network model are used to request to obtain the model files of the X sub-network model. Optionally, the model IDs of the X sub-network models may be carried in a message, and the message is used to request the model files of the X sub-network models.

Certainly, the first communication apparatus sends indexes corresponding to the model IDs of the X sub-network models to the third communication apparatus. Correspondingly, the third communication apparatus receives the indexes corresponding to the model IDs of the X sub-network models. In this way, information overheads can be reduced.

S1107: The third communication apparatus sends the model files of the X sub-network models to the first communication apparatus based on the model IDs of the X sub-network models. Correspondingly, the first communication apparatus receives the model files of the X sub-network models from the third communication apparatus.

The third communication apparatus queries the model library based on the model IDs of the X sub-network models, determines model files corresponding to the model IDs of the X sub-network models, and sends the model files of the X sub-network models.

It may be understood that the third communication apparatus further needs to send the model IDs of the X sub-network models, and there is a correspondence between the model ID and the model file, to indicate which model ID corresponding to a model file. The model ID may be carried in the model file or sent separately.

If N=X, that is, the first communication apparatus already has the N sub-network models, S1106 and S1107 are omitted.

S1108: The first communication apparatus executes the AI service based on model files of the N sub-network models.

The first communication apparatus forms the AI model based on the model files of the X sub-network models that are obtained in S1107 and the (N-X) sub-network models that already exist, and executes the AI service based on the AI model. Executing the AI service may be AI training, AI inference, or another AI service.

In the application scenario 5, the first communication apparatus independently completes the AI service. The first communication apparatus may further jointly complete the AI service with the third communication apparatus. When the AI service is jointly completed, the AI model corresponding to the AI service includes two parts of sub-network models. The first communication apparatus locally completes AI service processing of one part of sub-network models, and the third communication apparatus completes AI service processing of the other part of sub-network models. It may also be considered that the AI service includes a first part of the AI service and a second part of the AI service. The first communication apparatus processes the first part of the AI service based on a first part of sub-network models of the AI model, and the third communication apparatus processes the second part of the AI service based on a second part of sub-network models of the AI model. In this way, the first communication apparatus and the third communication apparatus may jointly complete AI service processing. The following provides a description by using an application scenario 6.

Application scenario 6:

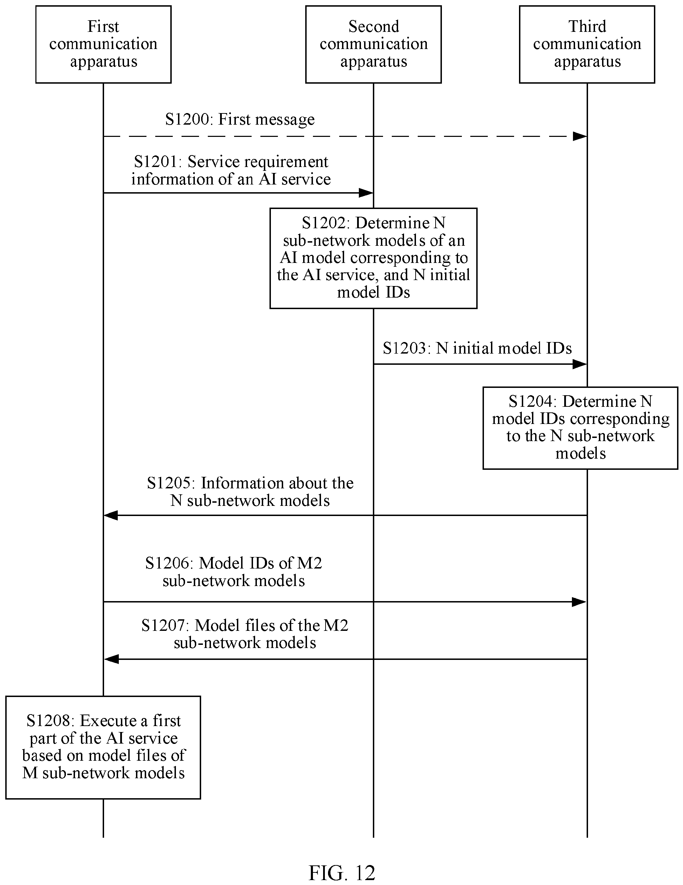

In the application scenario 6, as shown in FIG. 12, a specific procedure of an application method of an AI model identifier is as follows.

S1200 to S1205 are the same as S 1100 to S1105. For details, refer to descriptions of corresponding steps in the embodiment in FIG. 11.

S1206: The first communication apparatus sends model IDs of M2 sub-network models to the third communication apparatus, and correspondingly, the third communication apparatus receives the model IDs of the M2 sub-network models.

The model IDs of the M2 sub-network model are used to request to obtain model files of the M2 sub-network model. Optionally, the model IDs of the M2 sub-network models may be carried in a message, and the message is used to request the model files of the M2 sub-network models.

Certainly, the first communication apparatus may send indexes corresponding to the model IDs of the M2 sub-network models to the third communication apparatus. Correspondingly, the third communication apparatus receives the indexes corresponding to the model IDs of the M2 sub-network models. In this way, information overheads can be reduced.

Specifically, the first communication apparatus determines that a first part of the AI service needs to be processed based on M sub-network models in the N sub-network models. If the first communication apparatus already has the M sub-network models, that is, (N-X) sub-network models include the M sub-network models, the first communication apparatus processes the first part of the AI service based on the M sub-network models that already exist. If the first communication apparatus already has M1 sub-network models in the M sub-network models, the first communication apparatus further needs to request, from the third communication apparatus, the M2 sub-network models other than the M1 sub-network models in the M sub-network models.

S1207: The third communication apparatus sends the model files of the M2 sub-network models to the first communication apparatus based on the model IDs of the M2 sub-network models. Correspondingly, the first communication apparatus receives the model files of the M2 sub-network models from the third communication apparatus.

The third communication apparatus queries the model library based on the model IDs of the M2 sub-network models, determines model files corresponding to the model IDs of the M2 sub-network models, and sends the model files of the M2 sub-network models.

It may be understood that the third communication apparatus further needs to send the model IDs of the M2 sub-network models, and there is a correspondence between the model ID and the model file, to indicate which model ID corresponding to a model file. The model ID may be carried in the model file or sent separately.

S1208: The first communication apparatus processes the first part of the AI service based on the M sub-network models.

The M sub-network models include the M1 sub-network models that already exist and the M2 sub-network models obtained by requesting the third communication apparatus by using S1206 and S1207. The first communication apparatus forms the first part of sub-network models of the AI model based on the M1 sub-network models and the M2 sub-network models, and executes the first part of the AI service based on the first part of sub-network models. The executing the first part of the AI service may be AI training, AI inference, or another AI service.

Optionally, the third communication apparatus processes a second part of the AI service based on a sub-network model other than the M sub-network models in the N sub-network models. The third communication apparatus may further send a processing result of the second part of the AI service to the first communication apparatus, and the first communication apparatus obtains a processing result of the entire AI service based on the received processing result of the second part of the AI service and a processing result that is of the first part of the AI service and that is obtained by the first communication apparatus.

In embodiments of this application, when the model requester, that is, the first communication apparatus needs to request the model file of the sub-network model from the model provider, the model requester may add the parameter type of the required model file to the request. For example, one or more of the following types of the model file are required: the network structure, the model parameter, the code, or the configuration. The model provider may be the second communication apparatus or the third communication apparatus. The model provider provides, based on the request of the model requester, the parameter of the model file required by the model requester when returning the model file.

It should be noted that examples in the application scenarios in this application merely show some possible implementations, to help better understand and describe the method in this application. A person skilled in the art may obtain examples of some evolved forms according to the reference signal indication method provided in this application.

The foregoing describes the methods provided in embodiments of this application. To implement functions in the methods provided in the foregoing embodiments of this application, the communication apparatus may include a hardware structure and/or a software module, to implement the foregoing functions by using the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

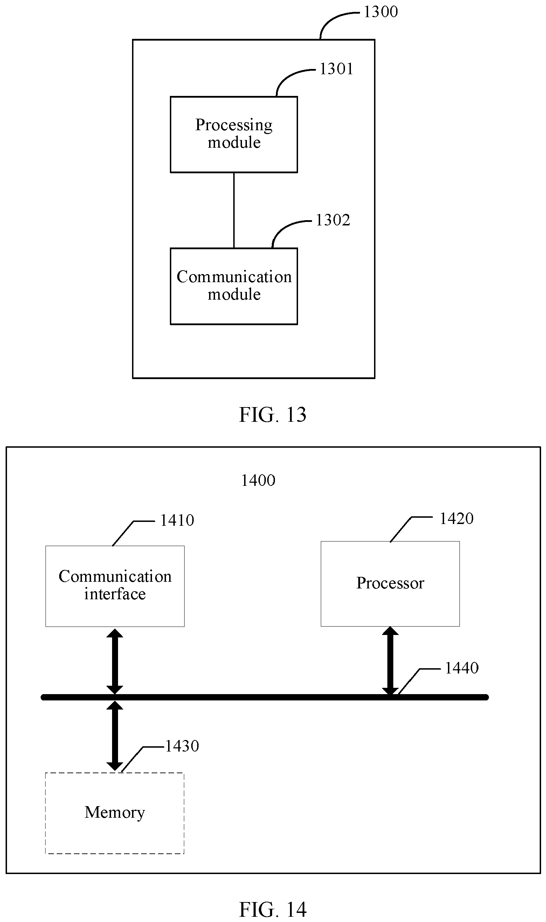

As shown in FIG. 13, based on a same technical concept, an embodiment of this application further provides a communication apparatus 1300. The communication apparatus 1300 may be a communication apparatus, or an apparatus in the communication apparatus, or an apparatus that can be used in a match with the communication apparatus. The communication apparatus 1300 may be a terminal device or a network device. In a design, the communication apparatus 1300 may include a one-to-one corresponding module for performing the method/operation/step/action performed by the first communication apparatus or the second communication apparatus in the foregoing method embodiment. The module may be a hardware circuit, or may be software, or may be implemented by the hardware circuit in combination with the software. In a design, the apparatus may include a processing module 1301 and a communication module 1302. The processing module 1301 is configured to invoke the communication module 1302 to perform a receiving function and/or a sending function.

When the communication apparatus 1300 is configured to perform the method of the first communication apparatus, the communication module 1302 is configured to receive information about an AI model of an AI service from a second communication apparatus, the AI model includes N sub-network models, the information about the AI model includes model files of X sub-network models in the N sub-network models, N and X are positive integers, N is greater than 1, and X is less than or equal to N; and the processing module 1301 is configured to execute the AI service based on the information about the AI model.

The communication module 1302 is further configured to perform a signal receiving or sending related operation performed by the first communication apparatus in the foregoing method embodiment. The processing module 1301 is further configured to perform an operation other than signal receiving and sending performed by the first communication apparatus in the foregoing method embodiment. Details are not described herein again. The first communication apparatus may be a terminal device or may be a network device.

When the communication apparatus 1300 is configured to perform the method of the second communication apparatus,

the processing module 1301 is configured to determine information about an AI model of an AI service based on request information, the AI model includes N sub-network models, the information about the AI model includes model files of X sub-network models in the N sub-network models, N and X are positive integers, N is greater than 1, and X is less than or equal to N; and the communication module 1302 is configured to send the information about the AI model.

The communication module 1302 is further configured to perform a signal receiving or sending related operation performed by the second communication apparatus in the foregoing method embodiment. The processing module 1301 is further configured to perform an operation other than signal receiving and sending performed by the second communication apparatus in the foregoing method embodiment. Details are not described herein again. The second communication apparatus may be a terminal device or may be a network device.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

FIG. 14 shows a communication apparatus 1400 according to an embodiment of this application. The communication apparatus 1400 is configured to implement a function of the communication apparatus in the foregoing method. The communication apparatus may be the first communication apparatus or may be the second communication apparatus. When a function of the first communication apparatus is implemented, the apparatus may be the first communication apparatus, an apparatus in the first communication apparatus, or an apparatus that can be used in a match with the first communication apparatus. When a function of the second communication apparatus is implemented, the apparatus may be the second communication apparatus, an apparatus in the second communication apparatus, or an apparatus that can be used in a match with the second communication apparatus. The communication apparatus 1400 may be a chip system. In embodiments of this application, the chip system may include a chip, or may include a chip and another discrete component. The communication apparatus 1400 includes at least one processor 1420, configured to implement a function of the first communication apparatus or the second communication apparatus in the method provided in embodiments of this application. The communication apparatus 1400 may further include a communication interface 1410. In embodiments of this application, the communication interface may be a transceiver, a circuit, a bus, a module, or a communication interface of another type, and is configured to communicate with another device by using a transmission medium. For example, the communication interface 1410 is used by the apparatus in the communication apparatus 1400 to communicate with the another apparatus. For example, when the communication apparatus 1400 is the first communication apparatus, the another apparatus may be the second communication apparatus. For another example, when the communication apparatus 1400 is the second communication apparatus, the another apparatus may be the first communication apparatus. For another example, when the communication apparatus 1400 is a chip, the another apparatus may be another chip or component in a communication device. The processor 1420 receives and sends data through the communication interface 1410, and is configured to implement the methods in the foregoing method embodiments.

For example, when the communication apparatus 1400 is configured to perform the method of the first communication apparatus,

the communication interface 1410 is configured to receive information about an AI model of an AI service from a second communication apparatus, the AI model includes N sub-network models, the information about the AI model includes model files of X sub-network models in the N sub-network models, N and X are positive integers, N is greater than 1, and X is less than or equal to N; and the processor 1420 is configured to execute the AI service based on the information about the AI model.

Optionally, the N sub-network models include Y backbone network models and (N-Y) functional network models, and Y is a positive integer.

Optionally, the communication interface 1410 is further configured to: send, to the second communication apparatus, model identifiers IDs of the X sub-network models or indexes corresponding to the model identifiers IDs of the X sub-network models; or send, to the second communication apparatus, model identifiers IDs of (N-X) sub-network models other than the X sub-network models in the N sub-network models or indexes corresponding to the model IDs of the (N-X) sub-network models.

Optionally, the communication interface 1410 is further configured to: receive information about the N sub-network models from the second communication apparatus, where the information about the N sub-network models includes the model IDs of the N sub-network models or indexes corresponding to the AI model; or receive, from the second communication apparatus, model IDs of (N-X) sub-network models other than the X sub-network models in the N sub-network models or indexes corresponding to the model IDs of the (N-X) sub-network models.

Optionally, the request information includes one or a combination of the following information: a service type of the AI service, a dataset type, a data type, or a computing resource.

Optionally, the processor 1420 is further configured to determine the model IDs of the N sub-network models.

For example, the processor 1420 is configured to determine a model ID group of a first sub-network model in the N sub-network models based on a communication scenario of the AI service, and determine a model ID of the first sub-network model, where the model ID of the first sub-network model is one model ID in the model ID group.

Optionally, a difference between accuracy rates of two models corresponding to any two model IDs in the model ID group is less than a specified threshold or the accuracy rates are both within a specified range.

Optionally, the model ID includes or indicates the following information: a model type of a sub-network model, a dataset type of the sub-network model, a data type of the sub-network model, a network layer number of the sub-network model, a backbone network type of the sub-network model, a backbone network dataset type of the sub-network model, a backbone network data type of the sub-network model, a backbone network layer number of the sub-network model, or a computing resource type of the sub-network model.

Optionally, the model ID is included in a packet header format; or the model ID is information obtained according to a mapping function, an input of the mapping function is information indicated by the model ID, and an output of the mapping function is the model ID.

When the communication apparatus 1400 is configured to perform the method of the second communication apparatus,

the processor 1420 is configured to determine information about an AI model of an AI service based on request information, the AI model includes N sub-network models, the information about the AI model includes model files of X sub-network models in the N sub-network models, N and X are positive integers, N is greater than 1, and X is less than or equal to N; and the communication interface 1410 is configured to send the information about the AI model.

In a possible design, the N sub-network models include Y backbone network models and (N-Y) functional network models, and Y is a positive integer.

In a possible design, the communication interface 1410 is further configured to: receive, from a first communication apparatus, model identifiers IDs of the X sub-network models or indexes corresponding to the model identifiers IDs of the X sub-network models; or receive, from the first communication apparatus, model identifiers IDs of (N-X) sub-network models other than the X sub-network models in the N sub-network models or indexes corresponding to the model identifiers IDs of the (N-X) sub-network models.

In a possible design, the communication interface 1410 is further configured to: send information about the N sub-network models to the first communication apparatus, where the information about the N sub-network models includes the model IDs of the N sub-network models or indexes corresponding to the AI model; or send, to the first communication apparatus, the model IDs of the (N-X) sub-network models other than the X sub-network models in the N sub-network models or indexes corresponding to the model IDs of the (N-X) sub-network models.

In a possible design, the request information includes one or a combination of the following information: a service type of the AI service, a dataset type, a data type, or a computing resource.

In a possible design, the processor 1420 is further configured to determine the model IDs of the N sub-network models.

For example, the processor 1420 is configured to determine a model ID group of a first sub-network model in the N sub-network models based on a communication scenario of the AI service, and determine a model ID of the first sub-network model, where the model ID of the first sub-network model is one model ID in the model ID group.

In a possible design, a difference between accuracy rates of two models corresponding to any two model IDs in the model ID group is less than a specified threshold or the accuracy rates are both within a specified range.

In a possible design, the model ID includes or indicates the following information: a model type of a sub-network model, a dataset type of the sub-network model, a data type of the sub-network model, a network layer number of the sub-network model, a backbone network type of the sub-network model, a backbone network dataset type of the sub-network model, a backbone network data type of the sub-network model, a backbone network layer number of the sub-network model, or a computing resource type of the sub-network model.

In a possible design, the model ID is included in a packet header format; or the model ID is information obtained according to a mapping function, an input of the mapping function is information indicated by the model ID, and an output of the mapping function is the model ID.

The processor 1420 and the communication interface 1410 may be further configured to perform other corresponding steps or operations performed by the first communication apparatus or the second communication apparatus in the foregoing method embodiment. Details are not described herein again.

The communication apparatus 1400 may further include at least one memory 1430, configured to store program instructions and/or data. The memory 1430 is coupled to the processor 1420. The coupling in embodiments of this application may be an indirect coupling or a communication connection between apparatuses, units, or modules in an electrical form, a mechanical form, or another form, and is used for information exchange between the apparatuses, the units, or the modules. The processor 1420 may operate with the memory 1430 together. The processor 1420 may execute the program instructions stored in the memory 1430. At least one of the at least one memory may be integrated with the processor.

A specific connection medium between the communication interface 1410, the processor 1420, and the memory 1430 is not limited in embodiments of this application. In embodiments of this application, in FIG. 14, the memory 1430, the processor 1420, and the communication interface 1410 are connected through a bus 1440. The bus is represented by a bold line in FIG. 14. A connection manner between other components is merely an example for description, and is not limited thereto. The bus may be classified into an address bus, a data bus, a control bus, and the like. For ease of representation, only one bold line is used to represent the bus in FIG. 14, but this does not mean that there is only one bus or only one type of bus.

When the communication apparatus 1300 and the communication apparatus 1400 are specifically chips or chip systems, baseband signals may be output or received by the communication module 1302 and the communication interface 1410. When the communication apparatus 1300 and the communication apparatus 1400 are specifically devices, radio frequency signals may be output or received by the communication module 1302 and the communication interface 1410. In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory 1430 may be a non-volatile memory, such as a hard disk drive (hard disk drive, HDD) or a solid-state drive (solid-state drive, SSD), or may be a volatile memory (volatile memory), such as a random access memory (random-access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

Some or all of the operations and functions performed by the first communication apparatus/second communication apparatus described in the foregoing method embodiments of this application may be implemented by using a chip or an integrated circuit.

An embodiment of this application provides a computer-readable storage medium storing a computer program. The computer program includes instructions used to perform the foregoing method embodiments.

An embodiment of this application provides a computer program product including instructions. When the computer program product runs on a computer, the foregoing method embodiments are performed.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

Although some embodiments of this application have been described, a person skilled in the art can make changes and modifications to these embodiments once they learn the basic inventive concept. Therefore, the following claims are intended to be construed as to cover the embodiments and all changes and modifications falling within the scope of this application.

Clearly, a person skilled in the art can make various modifications and variations to embodiments of this application without departing from the spirit and scope of embodiments of this application. This application is intended to cover these modifications and variations provided that they fall within the scope of protection defined by the following claims and their equivalent technologies.

## Claims

1. A communication method using artificial intelligence, applied to a first communication apparatus, comprising:

   receiving information about an artificial intelligence AI model from a second communication apparatus, wherein the AI model comprises N sub-network models, the N sub-network models respectively correspond to N model IDs, the information about the AI model comprises model files of X sub-network models in the N sub-network models, N and X are positive integers, N is greater than 1, and X is less than or equal to N; and
   executing an AI service based on the information about the AI model.

2. The method according to claim 1, wherein the N sub-network models comprise Y backbone network models and (N-Y) functional network models, and Y is a positive integer.

3. The method according to claim 1 or 2, wherein before the receiving information about an artificial intelligence AI model from a second communication apparatus, the method further comprises:

   sending, to the second communication apparatus, model IDs of the X sub-network models or indexes corresponding to the model IDs of the X sub-network models, wherein the model files corresponding to the X sub-network models do not exist locally or are damaged in the first communication apparatus; or
   sending, to the second communication apparatus, model IDs of (N-X) sub-network models other than the X sub-network models in the N sub-network models or indexes corresponding to the model IDs of the (N-X) sub-network models, wherein model files corresponding to the (N-X) sub-network models already exist locally in the first communication apparatus.

4. The method according to any one of claims 1 to 3, wherein the method further comprises:

   receiving information about the N sub-network models from the second communication apparatus, wherein the information about the N sub-network models comprises the model IDs of the N sub-network models or indexes corresponding to the AI model; or
   receiving, from the second communication apparatus, the model IDs of the (N-X) sub-network models other than the X sub-network models in the N sub-network models or the indexes corresponding to the model IDs of the (N-X) sub-network models.

5. The method according to any one of claims 1 to 4, wherein the method further comprises:
   sending, to the second communication apparatus, one or a combination of the following information: a service type of the AI service, a dataset type, a data type, or a computing resource, wherein the one or a combination of the service type of the AI service, the dataset type, the data type, or the computing resource is used to determine the model IDs of the N sub-network models.

6. The method according to any one of claims 1 to 4, wherein the method further comprises:
   determining the model IDs of the N sub-network models.

7. The method according to claim 6, wherein the determining the model IDs of the N sub-network models based on the AI service comprises:

   determining a model ID group of a first sub-network model in the N sub-network models based on a communication scenario of the AI service; and

determining a model ID of the first sub-network model, wherein the model ID of the first sub-network model is any model ID in the model ID group, and a difference between accuracy rates of two models corresponding to any two model IDs in the model ID group is less than a specified threshold or the accuracy rates are both within a specified range.

8. The method according to any one of claims 1 to 7, wherein the model ID comprises or indicates the following information: a model type of a sub-network model, a dataset type of the sub-network model, a data type of the sub-network model, a network layer number of the sub-network model, a backbone network type of the sub-network model, a backbone network dataset type of the sub-network model, a backbone network data type of the sub-network model, a backbone network layer number of the sub-network model, or a computing resource type of the sub-network model.

9. The method according to any one of claims 1 to 8, wherein the model ID is comprised in a packet header format; or the model ID is information obtained according to a mapping function, an input of the mapping function is information indicated by the model ID, and an output of the mapping function is the model ID.

10. A communication method using artificial intelligence, applied to a second communication apparatus, comprising:

determining information about an artificial intelligence AI model of an AI service, wherein the AI model comprises N sub-network models, the N sub-network models respectively correspond to N model IDs, the information about the AI model comprises model files of X sub-network models in the N sub-network models, N and X are positive integers, N is greater than 1, and X is less than or equal to N; and
sending the information about the AI model.

11. The method according to claim 10, wherein the N sub-network models comprise Y backbone network models and (N-Y) functional network models, and Y is a positive integer.

12. The method according to claim 10 or 11, wherein the method further comprises:

receiving, from the first communication apparatus, model IDs of the X sub-network models or indexes corresponding to the model IDs of the X sub-network models; or
receiving, from the first communication apparatus, model identifiers IDs of (N-X) sub-network models other than the X sub-network models in the N sub-network models or indexes corresponding to the model identifiers IDs of the (N-X) sub-network models.

13. The method according to any one of claims 10 to 12, wherein the method further comprises:

sending information about the N sub-network models to the first communication apparatus, wherein the information about the N sub-network models comprises the model IDs of the N sub-network models or indexes corresponding to the AI model; or
sending, to the first communication apparatus, the model IDs of the (N-X) sub-network models other than the X sub-network models in the N sub-network models or the indexes corresponding to the model IDs of the (N-X) sub-network models.

14. The method according to any one of claims 10 to 13, wherein the method further comprises:
receiving one or a combination of the following information from the first communication apparatus: a service type of the AI service, a dataset type, a data type, or a computing resource, wherein the one or a combination of the service type of the AI service, the dataset type, the data type, or the computing resource is used to determine the model IDs of the N sub-network models.

15. The method according to any one of claims 10 to 14, wherein the method further comprises:
determining the model IDs of the N sub-network models.

16. The method according to claim 15, wherein the determining the model IDs of the N sub-network models comprises:

determining a model ID group of a first sub-network model in the N sub-network models based on a communication scenario of the AI service; and
determining a model ID of the first sub-network model, wherein the model ID of the first sub-network model is any model ID in the model ID group, and a difference between accuracy rates of two models corresponding to any two model IDs in the model ID group is less than a specified threshold or the accuracy rates are both within a specified range.

17. The method according to any one of claims 10 to 16, wherein the model ID comprises or indicates the following information: a model type of a sub-network model, a dataset type of the sub-network model, a data type of the sub-network model, a network layer number of the sub-network model, a backbone network type of the sub-network model, a backbone network dataset type of the sub-network model, a backbone network data type of the sub-network model, a backbone network layer number of the sub-network model, or a computing resource type of the sub-network model.

18. The method according to any one of claims 10 to 17, wherein the model ID is comprised in a packet header format; or the model ID is information obtained according to a mapping function, an input of the mapping function is information indicated by the model ID, and an output of the mapping function is the model ID.

19. A communication apparatus, wherein the communication apparatus is a first communication apparatus and comprises:

a communication module, configured to receive information about an artificial intelligence AI model of an AI service from a second communication apparatus, wherein the AI model comprises N sub-network models, the N sub-network models respectively correspond to N model identifiers IDs, the information about the AI model comprises model files of X sub-network models in the N sub-network models, N and X are positive integers, N is greater than 1, and X is less than or equal to N; and
a processing module, configured to execute an AI service based on the information about the AI model.

20. The apparatus according to claim 19, wherein the N sub-network models comprise Y backbone network models and (N-Y) functional network models, and Y is a positive integer.

21. The apparatus according to claim 19 or 20, wherein before receiving the information about the artificial intelligence AI model from the second communication apparatus, the communication module is further configured to:

send, to the second communication apparatus, model IDs of the X sub-network models or indexes corresponding to the model IDs of the X sub-network models, wherein the model files corresponding to the X sub-network models do not exist locally or are damaged in the first communication apparatus; or
send, to the second communication apparatus, model IDs of (N-X) sub-network models other than the X sub-network models in the N sub-network models or indexes corresponding to the model IDs of the (N-X) sub-network models, wherein model files corresponding to the (N-X) sub-network models already exist locally in the first communication apparatus.

22. The apparatus according to any one of claims 19 to 21, wherein the communication module is further configured to:

receive information about the N sub-network models from the second communication apparatus, wherein the information about the N sub-network models comprises the model IDs of the N sub-network models or indexes corresponding to the AI model; or
receive, from the second communication apparatus, model IDs of (N-X) sub-network models other than the X sub-network models in the N sub-network models or indexes corresponding to the model IDs of the (N-X) sub-network models.

23. The apparatus according to any one of claims 19 to 22, wherein the communication module is further configured to: send, to the second communication apparatus, one or a combination of the following information: a service type of the AI service, a dataset type, a data type, or a computing resource, wherein the one or a combination of the service type of the AI service, the dataset type, the data type, or the computing resource is used to determine the model IDs of the N sub-network models, and is used to determine the model IDs of the N sub-network models.

24. The apparatus according to any one of claims 19 to 22, wherein the processing module is further configured to: determine the model IDs of the N sub-network models.

25. The apparatus according to claim 24, wherein when determining the model IDs of the N sub-network models based on the AI service, the processing module is configured to:

> determine a model ID group of a first sub-network model in the N sub-network models based on a communication scenario of the AI service; and
>
> determine a model ID of the first sub-network model, wherein the model ID of the first sub-network model is any model ID in the model ID group, and a difference between accuracy rates of two models corresponding to any two model IDs in the model ID group is less than a specified threshold or the accuracy rates are both within a specified range.

26. The apparatus according to any one of claims 19 to 25, wherein the model ID comprises or indicates the following information: a model type of a sub-network model, a dataset type of the sub-network model, a data type of the sub-network model, a network layer number of the sub-network model, a backbone network type of the sub-network model, a backbone network dataset type of the sub-network model, a backbone network data type of the sub-network model, a backbone network layer number of the sub-network model, or a computing resource type of the sub-network model.

27. The apparatus according to any one of claims 19 to 26, wherein the model ID is comprised in a packet header format; or the model ID is information obtained according to a mapping function, an input of the mapping function is information indicated by the model ID, and an output of the mapping function is the model ID.

28. A communication apparatus, wherein the communication apparatus is a second communication apparatus and comprises:

> a processing module, configured to determine information about an artificial intelligence AI model of an AI service, wherein the AI model comprises N sub-network models, the N sub-network models respectively correspond to N model identifiers IDs, the information about the AI model comprises model files of X sub-network models in the N sub-network models, N and X are positive integers, N is greater than 1, and X is less than or equal to N; and
>
> the communication module, further configured to send the information about the AI model.

29. The apparatus according to claim 28, wherein the N sub-network models comprise Y backbone network models and (N-Y) functional network models, and Y is a positive integer.

30. The apparatus according to claim 28 or 29, wherein the communication module is further configured to:

> receive, from the first communication apparatus, model IDs of the X sub-network models or indexes corresponding to the model IDs of the X sub-network models; or
>
> receive, from the first communication apparatus, model IDs of (N-X) sub-network models other than the X sub-network models in the N sub-network models or indexes corresponding to the model identifiers IDs of the (N-X) sub-network models.

31. The apparatus according to any one of claims 28 to 30, wherein the communication module is further configured to:

> send information about the N sub-network models to the first communication apparatus, wherein the information about the N sub-network models comprises the model IDs of the N sub-network models or indexes corresponding to the AI model; or
>
> send, to the first communication apparatus, the model IDs of the (N-X) sub-network models other than the X sub-network models in the N sub-network models or the indexes corresponding to the model IDs of the (N-X) sub-network models.

32. The apparatus according to any one of claims 28 to 31, wherein the communication module is further configured to: receive one or a combination of the following information from the first communication apparatus: a service type of the AI service, a dataset type, a data type, or a computing resource, wherein the one or a combination of the service type of the AI service, the dataset type, the data type, or the computing resource is used to determine the model IDs of the N sub-network models.

33. The apparatus according to any one of claims 28 to 32, wherein the processing module is further configured to: determine the model IDs of the N sub-network models.

34. The apparatus according to claim 33, wherein when determining the model IDs of the N sub-network models, the processing module is configured to:

   determine a model ID group of a first sub-network model in the N sub-network models based on a communication scenario of the AI service; and
   determine a model ID of the first sub-network model, wherein the model ID of the first sub-network model is any model ID in the model ID group, and a difference between accuracy rates of two models corresponding to any two model IDs in the model ID group is less than a specified threshold or the accuracy rates are both within a specified range.

35. The apparatus according to any one of claims 28 to 34, wherein the model ID comprises or indicates the following information: a model type of a sub-network model, a dataset type of the sub-network model, a data type of the sub-network model, a network layer number of the sub-network model, a backbone network type of the sub-network model, a backbone network dataset type of the sub-network model, a backbone network data type of the sub-network model, a backbone network layer number of the sub-network model, or a computing resource type of the sub-network model.

36. The apparatus according to any one of claims 28 to 35, wherein the model ID is comprised in a packet header format; or the model ID is information obtained according to a mapping function, an input of the mapping function is information indicated by the model ID, and an output of the mapping function is the model ID.

37. A communication apparatus, comprising a processor and a communication interface, wherein the communication interface is configured to communicate with another apparatus, and the processor is configured to run a group of programs, so that the method according to any one of claims 1 to 9 is performed.

38. A communication apparatus, comprising a processor and a communication interface, wherein the communication interface is configured to communicate with another apparatus, and the processor is configured to run a group of programs, so that the method according to any one of claims 10 to 18 is performed.

39. A computer-readable storage medium, wherein the computer-readable storage medium stores computer-readable instructions, and when the computer-readable instructions are run on a communication apparatus, the method according to any one of claims 1 to 9 is performed, or the method according to any one of claims 10 to 18 is performed.

40. A computer program product, wherein the computer program product comprises instructions, and when the instructions are run on a communication apparatus, the method according to any one of claims 1 to 9 is performed, or the method according to any one of claims 10 to 18 is performed.

FIG. 1

FIG. 2

FIG. 3a

Input layer       Hidden layer       Output layer

FIG. 3b

FIG. 4

FIG. 5a

Image classification and
segmentation application

Residual network
ResNet

Backbone
network model

Feature pyramid
network FPN

Region proposal
network
RPN

Functional
network model

Classifier network
classifier-NET

Mask network
Mask-NET

FIG. 5b

Image classification and segmentation application

First residual network ResNet

Second ResNet

Feature pyramid network FPN

Region proposal network
RPN

Classifier network classifier-NET

Mask network
Mask-NET

Backbone network model

Functional network model

FIG. 5c

Parameters of a sub-network model → Mapping function → Model identifier

FIG. 6

```
┌─────────────────────┐                    ┌─────────────────────┐
│  First communication│                    │       Second        │
│      apparatus      │                    │   communication     │
│                     │                    │     apparatus       │
└─────────────────────┘                    └─────────────────────┘
          │                                           │
          │        S700: First message                │
          │ - - - - - - - - - - - - - - - - - - - - ▶ │
          │                                           │
          │      S701: Service requirement            │
          │     information of an AI service          │
          │ ────────────────────────────────────────▶│
          │                              ┌────────────────────────────┐
          │                              │ S702: Determine N sub-network│
          │                              │    models of an AI model     │
          │                              │ corresponding to the AI service,│
          │                              │    and N initial model IDs   │
          │                              └────────────────────────────┘
          │                                ┌──────────────────────────┐
          │                                │ S703: Determine N model IDs│
          │                                │  corresponding to the N sub-│
          │                                │      network models       │
          │                                └──────────────────────────┘
          │     S704: Information about the N         │
          │          sub-network models               │
          │ ◀────────────────────────────────────────│
          │     S705: Model IDs of X sub-network      │
          │              models                       │
          │ ────────────────────────────────────────▶│
          │    S706: Model files of the X sub-network │
          │              models                       │
          │ ◀────────────────────────────────────────│
┌──────────────────────────┐                          │
│ S707: Execute the AI service│                        │
│ based on model files of the N│                       │
│     sub-network models    │                          │
└──────────────────────────┘                          │
          │                                           │
```

FIG. 7

```
┌──────────────────┐                    ┌──────────────────┐
│                  │                    │     Second       │
│ First communication                   │  communication   │
│    apparatus     │                    │    apparatus     │
└────────┬─────────┘                    └────────┬─────────┘
         │         S800: First message           │
         │- - - - - - - - - - - - - - - - - - - ▶│
         │      S801: Service requirement        │
         │      information of an AI service      │
         │──────────────────────────────────────▶│
         │                              ┌─────────┴──────────────┐
         │                              │ S802: Determine N sub-network
         │                              │   models of an AI model
         │                              │ corresponding to the AI service,
         │                              │   and N initial model IDs
         │                              └─────────┬──────────────┘
         │                              ┌─────────┴──────────────┐
         │                              │ S803: Determine N model IDs
         │                              │ corresponding to the N sub-
         │                              │   network models
         │                              └─────────┬──────────────┘
         │    S804: Information about the N        │
         │        sub-network models               │
         │◀──────────────────────────────────────│
         │    S805: Model IDs of M2 sub-network    │
         │              models                     │
         │──────────────────────────────────────▶│
         │   S806: Model files of the M2 sub-network
         │              models                     │
         │◀──────────────────────────────────────│
┌────────┴─────────┐                              │
│ S807: Execute a first part of the               │
│ AI service based on model files                 │
│   of M sub-network models                       │
└────────┬─────────┘                              │
         │                                        │
```

FIG. 8

```
┌─────────────────────┐                          ┌─────────────────────┐
│  First communication│                          │       Second        │
│      apparatus      │                          │    communication    │
│                     │                          │      apparatus      │
└─────────────────────┘                          └─────────────────────┘
           │                                                │
┌──────────────────────────┐                                │
│ S900: Determine N sub-    │                                │
│ network models of an AI   │                                │
│ model corresponding to an │                                │
│ AI service, and N initial │                                │
│ model IDs                 │                                │
└──────────────────────────┘                                │
           │                                                │
           │   S901: Model IDs of X sub-network             │
           │              models                            │
           │───────────────────────────────────────────────▶│
           │                                                │
           │   S902: Model files of the X sub-network       │
           │              models                            │
           │◀───────────────────────────────────────────────│
           │                                                │
┌──────────────────────────┐                                │
│ S903: Execute the AI      │                                │
│ service based on model    │                                │
│ files of the N sub-       │                                │
│ network models            │                                │
└──────────────────────────┘                                │
           │                                                │
```

FIG. 9

```
┌─────────────────────┐                    ┌─────────────────────┐
│  First communication│                    │        Second       │
│      apparatus      │                    │     communication   │
│                     │                    │       apparatus     │
└─────────────────────┘                    └─────────────────────┘
          │                                            │
 ┌────────────────────────┐                            │
 │ S1000: Determine N sub-│                            │
 │ network models of an AI│                            │
 │ model corresponding to │                            │
 │ an AI service,         │                            │
 │ and N initial model IDs│                            │
 └────────────────────────┘                            │
          │   S1001: Model IDs of M2 sub-network       │
          │                models                      │
          │────────────────────────────────────────▶  │
          │   S1002: Model files of the M2 sub-        │
          │             network models                 │
          │◀───────────────────────────────────────── │
 ┌────────────────────────┐                            │
 │ S1003: Execute a first │                            │
 │ part of the AI service │                            │
 │ based on model files of│                            │
 │ M sub-network models   │                            │
 └────────────────────────┘                            │
          │                                            │
```

FIG. 10

```
┌──────────────┐        ┌──────────────┐        ┌──────────────┐
│    First     │        │    Second    │        │    Third     │
│communication │        │communication │        │communication │
│  apparatus   │        │  apparatus   │        │  apparatus   │
└──────┬───────┘        └──────┬───────┘        └──────┬───────┘
       │     S1100: First message                       │
       │ ─ ─ ─ ─ ─ ─ ─ ─ ─ ─ ─ ─ ─ ─ ─ ─ ─ ─ ─ ─ ─ ─ ▶│
       │                       │                        │
       │  S1101: Service requirement                    │
       │  information of an AI service                  │
       │──────────────────────▶│                        │
       │              ┌────────────────────────┐        │
       │              │ S1102: Determine N     │        │
       │              │ sub-network models of  │        │
       │              │ an AI model            │        │
       │              │ corresponding to the   │        │
       │              │ AI service, and N      │        │
       │              │ initial model IDs      │        │
       │              └────────────────────────┘        │
       │                       │  S1103: N initial model IDs
       │                       │───────────────────────▶│
       │                       │          ┌──────────────────────┐
       │                       │          │ S1104: Determine N   │
       │                       │          │ model IDs            │
       │                       │          │ corresponding to the │
       │                       │          │ N sub-network models │
       │                       │          └──────────────────────┘
       │  S1105: Information about the                   │
       │      N sub-network models                       │
       │◀───────────────────────────────────────────────│
       │  S1106: Model IDs of X                           │
       │     sub-network models                           │
       │────────────────────────────────────────────────▶│
       │  S1107: Model files of the X                    │
       │     sub-network models                           │
       │◀───────────────────────────────────────────────│
┌──────────────────────┐       │                        │
│ S1108: Execute the   │       │                        │
│ AI service based on  │       │                        │
│ model files of the N │       │                        │
│ sub-network models   │       │                        │
└──────────────────────┘       │                        │
       │                       │                        │
```

FIG. 11

```
┌──────────────┐        ┌──────────────┐        ┌──────────────┐
│    First     │        │    Second    │        │    Third     │
│communication │        │communication │        │communication │
│  apparatus   │        │  apparatus   │        │  apparatus   │
└──────┬───────┘        └──────┬───────┘        └──────┬───────┘
       │  S1200: First message                          │
       ├ ─ ─ ─ ─ ─ ─ ─ ─ ─ ─ ─ ─ ─ ─ ─ ─ ─ ─ ─ ─ ─ ─ ─▶│
       │                       │                         │
       │ S1201: Service requirement                      │
       │ information of an AI service                     │
       ├──────────────────────▶│                         │
       │          ┌────────────┴──────────────┐          │
       │          │ S1202: Determine N         │          │
       │          │ sub-network models of an   │          │
       │          │ AI model corresponding to  │          │
       │          │ the AI service, and N initial│        │
       │          │ model IDs                  │          │
       │          └────────────┬──────────────┘          │
       │                       │  S1203: N initial model IDs
       │                       ├────────────────────────▶│
       │                       │           ┌─────────────┴──────┐
       │                       │           │ S1204: Determine N  │
       │                       │           │ model IDs corresponding│
       │                       │           │ to the N sub-network│
       │                       │           │ models             │
       │                       │           └─────────────┬──────┘
       │ S1205: Information about the                     │
       │ N sub-network models                            │
       │◀──────────────────────┼─────────────────────────┤
       │                       │                         │
       │ S1206: Model IDs of M2                           │
       │ sub-network models                              │
       ├───────────────────────┼────────────────────────▶│
       │ S1207: Model files of the M2                     │
       │ sub-network models                              │
       │◀──────────────────────┼─────────────────────────┤
┌──────┴──────────┐            │                         │
│ S1208: Execute a first       │                         │
│ part of the AI service       │                         │
│ based on model files of      │                         │
│ M sub-network models         │                         │
└──────┬──────────┘            │                         │
       │                       │                         │
```

FIG. 12

FIG. 13

FIG. 14

<p style="text-align:center"><b>INTERNATIONAL SEARCH REPORT</b></p>

| International application No. |
| --- |
| **PCT/CN2022/091278** |

**A. CLASSIFICATION OF SUBJECT MATTER**

H04L 41/08(2022.01)i; G06N 3/00(2006.01)i

According to International Patent Classification (IPC) or to both national classification and IPC

**B. FIELDS SEARCHED**

Minimum documentation searched (classification system followed by classification symbols)

H04L; G06N

Documentation searched other than minimum documentation to the extent that such documents are included in the fields searched

Electronic data base consulted during the international search (name of data base and, where practicable, search terms used)

CNTXT; WPABSC; ENTXTC; VEN; CNKI: 网络, 人工智能, 模型, 管理, 第二, 另一, 需求, 子, 服务端, 设备, 装置, 服务器, 发送, 请求, 接收, 子网络, 客户, AI, artificial intelligence, sub, network, receiv+, send+, model, another, server, user, client

**C. DOCUMENTS CONSIDERED TO BE RELEVANT**

| Category* | Citation of document, with indication, where appropriate, of the relevant passages | Relevant to claim No. |
| --- | --- | --- |
| X | CN 108573307 A (VIVO COMMUNICATION TECHNOLOGY CO., LTD.) 25 September 2018 (2018-09-25) <br> description, paragraphs [0032]-[0147] | 1-40 |
| X | CN 111563592 A (BEIJING BAIDU NETCOM SCIENCE AND TECHNOLOGY CO., LTD.) 21 August 2020 (2020-08-21) <br> description, paragraphs [0020]-[0095] | 1-40 |
| A | CN 111027397 A (SHANGHAI JIAO TONG UNIVERSITY) 17 April 2020 (2020-04-17) <br> entire document | 1-40 |
| A | US 2020045163 A1 (LG ELECTRONICS INC.) 06 February 2020 (2020-02-06) <br> entire document | 1-40 |

☐ Further documents are listed in the continuation of Box C.  ☑ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **09 July 2022** | **22 July 2022** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/091278**

| Patent document cited in search report | | | Publication date (day/month/year) | Patent family member(s) | | | Publication date (day/month/year) |
|---|---|---|---|---|---|---|---|
| CN | 108573307 | A | 25 September 2018 | None | | | |
| CN | 111563592 | A | 21 August 2020 | None | | | |
| CN | 111027397 | A | 17 April 2020 | None | | | |
| US | 2020045163 | A1 | 06 February 2020 | KR | 20190107621 | A | 20 September 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110640849